# EUROPEAN PATENT APPLICATION

(11) **EP 4 513 330 A1**
(43) Date of publication of application: **26.02.2025**
(21) Application number: 22942544.2
(22) Date of filing: 29.12.2022
(51) Int. Cl.: G06F 9/50

(54) **RESOURCE ALLOCATION METHOD AND APPARATUS OF CIRCUIT BOARD, CIRCUIT BOARD, AND STORAGE MEDIUM**

(30) Priority: 19.05.2022 CN 202210555101
(71) Applicant: Huawei Technologies Co., Ltd., Shenzhen, Guangdong 518129 (CN)
(72) Inventor: SHEN, Limei, Shenzhen, Guangdong 518129 (CN); QIU, Liangen, Shenzhen, Guangdong 518129 (CN); GONG, Binyang, Shenzhen, Guangdong 518129 (CN)
(74) Representative: Pfenning, Meinig & Partner mbB
(86) International application number: PCT/CN2022/143285
(87) International publication number: WO 2023/221525

(57) **Abstract**

This application discloses a resource allocation method of a circuit board, an apparatus, a circuit board, and a storage medium, and relates to the field of computer technologies. In the method, a BIOS of a circuit board automatically allocates a resource to a hardware unit based on a resource amount pre-allocated by the circuit board for the hardware unit and a resource amount requested by the hardware unit. In this way, the BIOS can allocate the resource to the hardware unit without being upgraded, which reduces maintenance costs of the BIOS.

## Description

This application claims priority to Chinese Patent Application No. 202210555101.X, filed on May 19, 2022 and entitled "RESOURCE ALLOCATION METHOD OF CIRCUIT BOARD, APPARATUS, CIRCUIT BOARD, AND STORAGE MEDIUM", which is incorporated herein by reference in its entirety.

### TECHNICAL FIELD

This application relates to the field of computer technologies, and in particular, to a resource allocation method of a circuit board, an apparatus, a circuit board, and a storage medium.

### BACKGROUND

A computer device includes a circuit board, and the computer device can be further connected to a peripheral device. When identifying a peripheral device connected to the computer device, a basic input/output system (basic input/output system, BIOS) of the circuit board uses the peripheral device as a hardware unit of the computer device, and allocates a resource provided by the circuit board to the identified peripheral device.

Currently, a process of allocating a resource of the circuit board includes: The BIOS records, by using a trustlist, identifiers of various peripheral devices connected to the computer device; and in a booting process, the BIOS identifies, based on the identifiers of the peripheral devices recorded in the trustlist, a peripheral device currently connected to the computing device, and allocates a resource to the peripheral device successfully identified.

For the foregoing resource allocation process, once the computer device is connected to a new peripheral device, the trustlist needs to be updated, and the BIOS further needs to be upgraded, so that an upgraded BIOS can identify the newly connected peripheral device based on an updated trustlist, and uses the newly connected peripheral device as the hardware unit of the computer device. Correspondingly, if the computer device is frequently connected to a new peripheral device, the BIOS needs to be continually upgraded, which increases maintenance costs of the BIOS.

### SUMMARY

Embodiments of this application provide a resource allocation method of a circuit board, an apparatus, a circuit board, and a storage medium, to reduce maintenance costs of a BIOS. The technical solutions are as follows:

According to a first aspect, a resource allocation method of a circuit board is provided. The circuit board is connected to a hardware unit. The hardware unit is configured to provide a hardware resource. The method is applied to a basic input/output system BIOS of the circuit board. The method includes:
allocating a resource to the hardware unit based on a first resource amount and a second resource amount, where the first resource amount is a resource amount pre-allocated by the circuit board to the hardware unit, and the second resource amount is a resource amount requested by the hardware unit.

In the method, the BIOS of the circuit board automatically allocates a resource to the hardware unit based on the resource amount pre-allocated by the circuit board for the hardware unit and the resource amount requested by the hardware unit. In this way, the BIOS can allocate the resource to the hardware unit without being upgraded, which reduces maintenance costs of the BIOS.

In a possible implementation, the circuit board is located in a computer device, the hardware unit is a peripheral device of the computer device, the hardware unit is connected to the circuit board through a slot, and the first resource amount is equal to a maximum resource amount corresponding to the slot.

In a possible implementation, the circuit board is connected to a connector, the slot is a fitting slot on the connector, the hardware unit is connected to the slot, and before the allocating a resource to the hardware unit based on a first resource amount and a second resource amount, the method further includes:
reading, from the connector, the maximum resource amount corresponding to the slot, and using the read maximum resource amount as the first resource amount.

In a possible implementation, the circuit board further includes a resource manager, the resource manager is connected to each of the BIOS and the connector, and the reading, from the connector, the maximum resource amount corresponding to the slot includes:
reading, from the connector through the resource manager, the maximum resource amount corresponding to the slot.

In a possible implementation, the slot is a fitting slot on the circuit board, the hardware unit is connected to the slot, the circuit board further includes a resource manager, the resource manager is connected to each of the BIOS and the slot, and before the allocating a resource to the hardware unit based on a first resource amount and a second resource amount, the method further includes:
obtaining, through the resource manager, the maximum resource amount corresponding to the slot, and using the obtained maximum resource amount as the first resource amount.

In a possible implementation, the hardware unit includes a plurality of hardware subunits, the second resource amount includes a plurality of third resource amounts, each third resource amount corresponds to one hardware subunit in the plurality of hardware subunits, each third resource amount is a maximum resource amount corresponding to the corresponding hardware subunit, and before the allocating a resource to the hardware unit based on a first resource amount and a second resource amount, the method further includes:
reading the plurality of third resource amounts from the hardware unit.

In a possible implementation, the hardware unit includes the plurality of hardware subunits, the second resource amount includes the plurality of third resource amounts, each third resource amount corresponds to one hardware subunit in the plurality of hardware subunits, each third resource amount is the maximum resource amount corresponding to the corresponding hardware subunit, and the allocating a resource to the hardware unit based on a first resource amount and a second resource amount includes:
if the first resource amount is greater than or equal to a sum of the plurality of third resource amounts, separately allocating the resource corresponding to the third resource amount to each hardware subunit.

In a possible implementation, before the allocating a resource to the hardware unit based on a first resource amount and a second resource amount, the method further includes:
if the first resource amount is greater than a target resource amount stored at a first address in the hardware unit, creating at least two logical interfaces for the hardware unit based on a multiple between the first resource amount and the target resource amount, where a quantity of at least two logical interfaces is equal to the multiple, and each logical interface is configured to mount one hardware subunit in the hardware unit; and
separately performing a subunit mounting operation on the at least two logical interfaces, where the subunit mounting operation is used to mount a hardware subunit on the logical interface, where
if a hardware subunit is successfully mounted on each of a plurality of logical interfaces in the at least two logical interfaces, the hardware unit includes the plurality of hardware subunits.

In a possible implementation, the circuit board further includes a processor, and the separately performing a subunit mounting operation on the at least two logical interfaces includes:
establishing at least two first links, where each first link corresponds to one logical interface, and each first link is used for communication between the processor and the corresponding logical interface; and
establishing mapping relationships between the at least two logical interfaces, the at least two first links, and at least two second addresses, where each second address is an address allocated by the BIOS to a hardware subunit mounted on a corresponding logical interface.

In a possible implementation, the hardware unit is a high-speed serial computer expansion bus standard PCIe device, and the resource is a bandwidth.

In a possible implementation, the circuit board includes a plurality of processors, the hardware unit is any one of the plurality of processors, and the first resource amount is equal to a total resource amount of the resource divided by a total quantity of the plurality of processors.

In a possible implementation, the circuit board is located in a computer device, at least one peripheral device of the computer device is mounted on the hardware unit, and the circuit board is connected to the at least one peripheral device through at least one slot; and
if the resource is a bus, the second resource amount is equal to a sum of a total resource amount requested by the at least one peripheral device and a fourth resource amount, where the fourth resource amount is a total resource amount pre-allocated by the BIOS for a hot plug function of a target slot, and the target slot is a slot, in the at least one slot, that has a hot plug function.

In a possible implementation, the total resource amount requested by the at least one peripheral device is equal to a sum of a first quantity and a second quantity, where the first quantity is a total quantity of first peripheral devices in the at least one peripheral device, the second quantity is a total quantity of hardware subunits in a second peripheral device in the at least one peripheral device, the first peripheral device is a peripheral device, in the at least one peripheral device, that does not include a hardware subunit, and the second peripheral device is a peripheral device, in the at least one peripheral device, that includes a hardware subunit. Before the allocating a resource to the hardware unit based on a first resource amount and a second resource amount, the method further includes:
counting the total quantity of the first peripheral devices in the at least one peripheral device to obtain the first quantity;
counting the total quantity of the hardware subunits in the second peripheral device in the at least one peripheral device to obtain the second quantity;
using the sum of the first quantity and the second quantity that are counted as the total resource amount requested by the at least one peripheral device;
determining the fourth resource amount based on a quantity of target slots in the at least one slot; and
using the sum of the total resource amount requested by the at least one peripheral device and the fourth resource amount as the second resource amount.

In a possible implementation, the circuit board is located in a computer device, at least one peripheral device of the computer device is mounted on the hardware unit, and if the resource is a memory-mapped input/output address, the second resource amount is equal to a sum of resource amounts requested by the at least one peripheral device.

In a possible implementation, before the allocating a resource to the hardware unit based on a first resource amount and a second resource amount, the method further includes:
for each peripheral device in the at least one peripheral device, if the peripheral device does not include a hardware subunit, using a maximum resource amount corresponding to the peripheral device as a resource amount requested by the peripheral device, or if the peripheral device includes a plurality of hardware subunits, using a sum of maximum resource amounts corresponding to the plurality of hardware subunits as a resource amount requested by the peripheral device; and
using the sum of resource amounts requested by the at least one peripheral device as the second resource amount.

In a possible implementation, before the allocating a resource to the hardware unit based on a first resource amount and a second resource amount, the method further includes:
if the first resource amount is stored in the BIOS, obtaining the stored first resource amount; and
if the circuit board further includes a resource manager, obtaining the first resource amount through the resource manager, where the resource manager is connected to each of the BIOS, the hardware unit, and the at least one peripheral device.

In a possible implementation, the allocating a resource to the hardware unit based on a first resource amount and a second resource amount includes:
if the first resource amount is less than the second resource amount, and a target processor exists in the plurality of processors, allocating a redundant resource of the target processor to the hardware unit, so that the hardware unit is allocated a resource of the second resource amount, where
a resource amount of a resource pre-allocated by the circuit board to the target processor is greater than a resource amount requested by the target processor.

In a possible implementation, the resource manager is a complex programmable logic device or a microcontroller.

According to a second aspect, a resource allocation apparatus is provided, configured to perform the foregoing resource allocation method. Specifically, the resource allocation apparatus includes a functional module configured to perform the resource allocation method provided in any one of the first aspect or the optional implementations of the first aspect.

According to a third aspect, a circuit board is provided. The circuit board includes a resource allocation unit. The resource allocation unit is configured to load at least one piece of program code from a memory and execute the program code, so that the resource allocation unit performs an operation performed in the foregoing resource allocation method.

According to a fourth aspect, a computer-readable storage medium is provided. The storage medium stores at least one piece of program code, and the program code is read by a resource allocation unit in a circuit board, so that the resource allocation unit performs an operation performed in the foregoing resource allocation method.

According to a fifth aspect, a computer program product is provided. The computer program product includes program code. The program code is stored in a computer-readable storage medium. A resource allocation unit in a circuit board reads the program code from the computer-readable storage medium, and the resource allocation unit executes the program code, so that the resource allocation unit performs the method provided in the first aspect or the optional implementations of the first aspect.

In this application, based on implementations provided in the foregoing aspects, the implementations may be further combined to provide more implementations.

### BRIEF DESCRIPTION OF DRAWINGS

FIG. 1 is a schematic of a structure of a circuit board according to an embodiment of this application;
FIG. 2 is a schematic of a structure of another circuit board according to an embodiment of this application;
FIG. 3 is a flowchart of a resource allocation method of a circuit board according to an embodiment of this application;
FIG. 4 is a flowchart of a resource allocation method when a hardware unit is a peripheral device according to an embodiment of this application;
FIG. 5 is a flowchart of a resource allocation method when a hardware unit is a processor according to an embodiment of this application;
FIG. 6 is a flowchart of another resource allocation method when a hardware unit is a peripheral device according to an embodiment of this application;
FIG. 7 is a schematic of a structure of a circuit board according to an embodiment of this application;
FIG. 8 is a flowchart of allocating a bandwidth to a riser card according to an embodiment of this application;
FIG. 9 is a flowchart of allocating a bandwidth to a multi-chip PCIe device according to an embodiment of this application;
FIG. 10 is a flowchart of another resource allocation method when a hardware unit is a processor according to an embodiment of this application;
FIG. 11 is a flowchart of allocating a bus to a CPU according to an embodiment of this application;
FIG. 12 is a flowchart of a resource allocation method of a circuit board according to an embodiment of this application;
FIG. 13 is a schematic of a structure of a resource allocation apparatus according to an embodiment of this application; and
FIG. 14 is a schematic of a structure of a circuit board according to an embodiment of this application.

### DESCRIPTION OF EMBODIMENTS

For ease of understanding, some terms in embodiments of this application are first explained as follows:
A circuit board provides a resource, and automatically allocates the resource provided by the circuit board to an identified hardware unit, to communicate with the hardware unit by using the allocated resource, where the circuit board is, for example, a main board. The provided resource includes at least one of a bandwidth, a bus (bus), and a memory-mapped input/output (memory-mapped input/output, MMIO) address.

A hardware unit is configured to provide a hardware resource. The hardware resource includes at least one of a computing resource, a storage resource, and another resource.

A resource amount is an amount of resources, such as a size of a bandwidth, a quantity of buses, or a size of an MMIO address.

A first resource amount is a resource amount pre-allocated by the circuit board to the hardware unit, where the pre-allocated resource amount is a resource amount allocated to the hardware unit when the circuit board pre-allocates a resource to the hardware unit. Pre-allocation in this application is preliminary planning for the use of resources, in which a resource amount is allocated. In a possible implementation, pre-allocation is implemented by dividing resources provided by the circuit board. For example, the resource is a bus. The circuit board provides 100 buses, and the circuit board is connected to 10 hardware units. The 100 buses are evenly divided into 10 parts. In this case, a resource amount pre-allocated by the circuit board to each hardware unit is 10. In another possible implementation, pre-allocation is implemented by presetting a resource amount for the hardware unit. For example, a resource amount is preset for each hardware unit connected to the circuit board, to implement pre-allocation, where the resource amount preset for the hardware unit is a pre-allocated resource amount. The presetting of a resource amount may be implemented by a user by recording a resource amount in the circuit board. For example, for at least one hardware unit that can provide a hardware resource for the circuit board, the user prestores a correspondence between the at least one hardware unit and at least one first resource amount in the circuit board. Each hardware unit corresponds to one first resource amount, and the correspondence indicates to pre-allocate a resource of the first resource amount to a corresponding hardware unit. The at least one hardware unit includes a hardware unit already connected to the circuit board and/or a hardware unit not connected to the circuit board. The hardware unit not connected to the circuit board may be a hardware unit that may be subsequently connected to the circuit board. The presetting a resource amount may alternatively be implemented by the user by selecting, for the hardware unit, an interface connected to the circuit board. For example, the user selects an interface, and connects the hardware unit to the circuit board through the selected interface. A maximum resource amount supported by the interface selected by the user is a resource amount preset by the user for the hardware unit. For the circuit board, the maximum resource amount supported by the interface selected by the user is a resource amount pre-allocated by the circuit board to the hardware unit. For example, the resource is a bandwidth. The user connects a hardware unit 1 to an interface 1 of the circuit board, and a maximum bandwidth supported by the interface 1 is 8K. In this case, 8K is a resource amount preset by the user for the hardware unit 1, and is a resource amount pre-allocated by the circuit board for the hardware unit 1.

A second resource amount is a resource amount requested by the hardware unit. The resource amount requested by the hardware unit is a maximum resource amount that may be requested by the hardware unit from the circuit board in a working process, and may be understood as a maximum resource amount required by the hardware unit in the working process. The second resource amount is further described subsequently with reference to a specific embodiment.

The following further describes in detail implementations of this application with reference to the accompanying drawings.

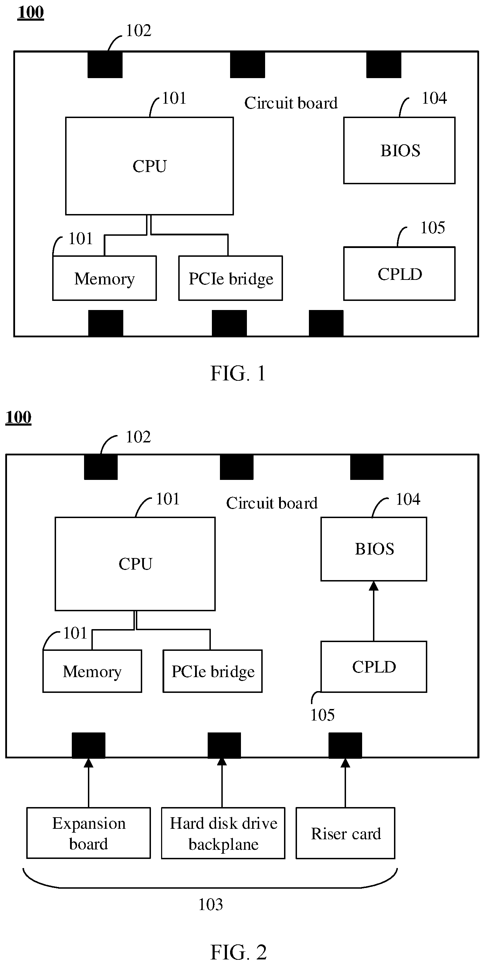

FIG. 1 is a schematic of a structure of a circuit board according to an embodiment of this application. Refer to FIG. 1. A circuit board 100 is connected to at least one hardware unit 101, and each hardware unit 101 is configured to provide a hardware resource. The hardware unit 101 includes at least one of a processor or a peripheral device, where the processor is located on the circuit board, and a hardware resource provided by the processor includes a computing resource. There is at least one processor on the circuit board. The processor is, for example, a central processing unit (central processing unit, CPU).

The peripheral device is the hardware unit 101 connected to the circuit board 100 through an interface 102 on the circuit board 100. A hardware resource provided by the peripheral device includes a storage resource and another type of hardware resource other than the storage resource. The peripheral device includes a peripheral component interconnect (peripheral component interconnect, PCI) device, a peripheral component interconnect express (peripheral component interconnect express, PCIe) device, a storage device, or the like. A hardware resource provided by the PCI device or the PCIe device includes another type of hardware resource other than the storage resource. A hardware resource provided by the storage device includes a storage resource. The storage device is, for example, a hard disk drive, a read-only memory (read-only memory, ROM), a random access memory (random access memory, RAM), a compact disc read-only memory (compact disc read-only memory, CD-ROM), a magnetic tape, a floppy disk, or the like. The hard disk drive is, for example, a serial attached small computer system interface (serial attached small computer system interface, SAS) hard disk drive or a serial advanced technology attachment (serial advanced technology attachment, SATA) hard disk drive.

There is at least one interface 102 on the circuit board 100. Any interface 102 on the circuit board 100 is a wired interface or a wireless interface. The wireless interface is for example, a fitting slot. Each interface 102 on the circuit board 100 is connected to one or more hardware units 101 in direct connection or cascade connection. For example, FIG. 2 is a schematic of a structure of another circuit board according to an embodiment of this application. An interface 102 on the circuit board 100 shown in FIG. 2 is connected to one or more peripheral devices through a connector 103. At least one fitting slot is provided in the connector 103, and each fitting slot is configured to connect to one peripheral device. The fitting slot in the connector 103 is used to expand an interface of the circuit board 100. The connector 103 includes connectors of different types, such as a riser card, a hard disk drive backplane, and an expansion card. Different types of connectors can connect to different types of peripheral devices. For example, the riser card can connect to a PCI device or a PCIe device, the hard disk drive backplane can connect to a hard disk drive, and the expansion card can connect to other types of peripheral devices.

In a possible implementation, a processor on the circuit board 100 is connected to the interface 102 through bridging, so that the processor can communicate with a peripheral device connected to the interface 102. For example, a peripheral device connected to an interface is a PCIe device or a PCI device. The processor establishes a link to the interface by using a PCIe bridge, and accesses, over the link, the PCIe device or the PCI device connected to the interface. For another example, a peripheral device connected to an interface is a SAS hard disk drive. The processor establishes a link to the interface by using a SAS bridge, and accesses, over the link, the SAS hard disk drive connected to the interface.

In a possible implementation, as shown in FIG. 1, some storage device is connected to the processor as a memory (memory) of the processor. Such storage device may be located on a main board. Such storage device is also a hardware unit 101 of the circuit board.

In a possible implementation, the circuit board 100 is located in a computer device, and a hardware unit connected to the circuit board 100 is used as a hardware unit of the computer device, to provide a hardware resource for the computer device. The computer device is a server or a terminal. The server is, for example, a local server or a cloud server. The terminal is, for example, user equipment, a portable terminal, a laptop terminal, a desktop terminal, or the like.

The circuit board can run a BIOS. As shown in FIG. 1, the circuit board 100 includes a target chip 104. The target chip 104 is a carrier of the BIOS, and can run the BIOS to implement a function of the BIOS. For each hardware unit 101 connected to the circuit board 100, the BIOS can allocate a resource to the hardware unit 101 based on a first resource amount and a second resource amount corresponding to the hardware unit 101. In this way, automatic resource allocation is implemented without upgrading the BIOS, so that maintenance costs of the BIOS are reduced.

In a possible implementation, the circuit board 100 further includes a resource manager 105, and the resource manager 105 is connected to each of the BIOS and the hardware unit 101. If some hardware unit 101 is located on the circuit board 100, the BIOS is directly or indirectly connected to the hardware unit 101. If the hardware unit 101 is a peripheral device of the circuit board 100, the BIOS is indirectly connected to the hardware unit 101 through the interface 102 of the circuit board. The resource manager 105 is a complex programmable logic device (complex programmable logic device, CPLD) or a microcontroller (micro controller unit, MCU). A hardware form of the resource manager 105 is not limited in this embodiment of this application. The resource manager 105 is configured to provide the BIOS with a first resource amount corresponding to each hardware unit 101 connected to the circuit board 100. For example, after the circuit board 100 is powered on, the resource manager 105 obtains the first resource amount corresponding to each hardware unit 101 connected to the circuit board 100, and stores the obtained first resource amount corresponding to each hardware unit 101. After receiving an instruction from the BIOS for requesting to obtain the first resource amount, the resource manager 105 returns the stored first resource amount corresponding to the at least one hardware unit 101 to the BIOS. Alternatively, after receiving the instruction from the BIOS for requesting to obtain the first resource amount, the resource manager 105 obtains, based on the instruction from the BIOS, a first resource amount corresponding to the at least one hardware unit 101, and returns the obtained first resource amount corresponding to the at least one hardware unit 101 to the BIOS.

It should be noted that the resource manager 105 is an optional component on the circuit board 100. For example, the circuit board 100 shown in FIG. 1 or FIG. 2 includes the resource manager 105. In another possible implementation, the BIOS integrates a function of the resource manager 105, and the circuit board 100 does not include the resource manager 105.

It can be learned from the foregoing description of the circuit board that the circuit board can be connected to at least one hardware unit. If the circuit board is located in a computer device, each hardware unit connected to the circuit board is a hardware unit of the computer device, and a BIOS of the circuit board is a BIOS of the computer device. Because processes in which the BIOS allocates a resource to the hardware units connected to the circuit board are similar, for ease of description, one hardware unit connected to the circuit board is used as an example below to describe a process in which the BIOS allocates a resource to the hardware unit.

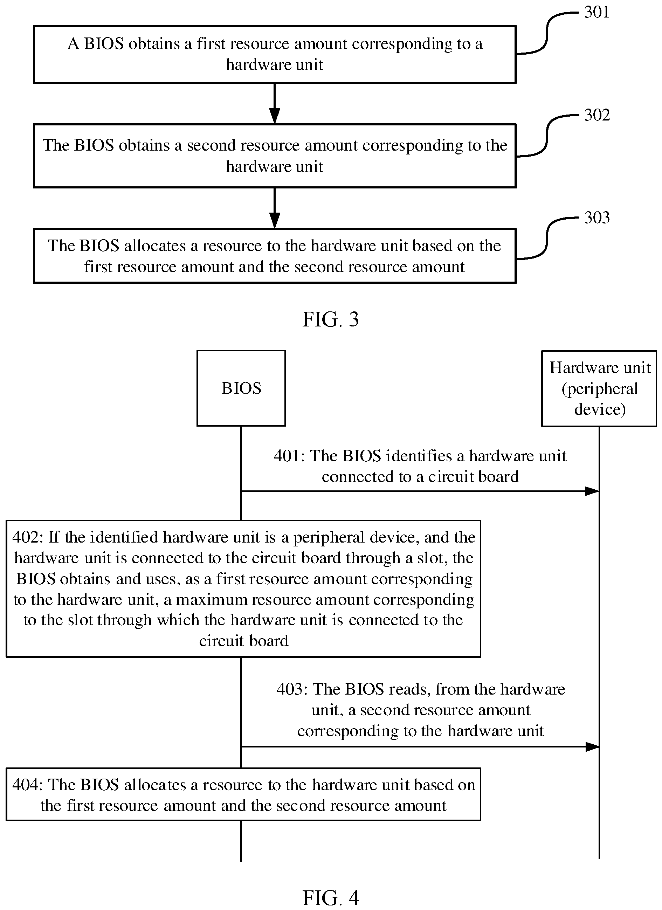

FIG. 3 is a flowchart of a resource allocation method of a circuit board according to an embodiment of this application. The circuit board is connected to a hardware unit. The hardware unit is configured to provide a hardware resource. The method is applied to a BIOS of the circuit board. The method includes the following steps 301 to 303.

301: The BIOS obtains a first resource amount corresponding to the hardware unit, where the first resource amount is a resource amount pre-allocated by the circuit board to the hardware unit.

The circuit board includes a main board or another type of circuit board. The resource provided by the circuit board includes at least one of a bandwidth, a bus, and an MMIO address, and the resource provided by the circuit board is a resource to be allocated by the BIOS. The hardware unit is any hardware unit connected to the circuit board. The hardware unit is a peripheral device or a processor. For example, the hardware unit is a peripheral device such as a PCIe device or a PCI device. For another example, the processor is a CPU.

In a possible implementation, when the hardware unit is a peripheral device, if the circuit board is located in a computer device, the hardware unit is a peripheral device of the computer device. In a possible implementation, if the hardware unit is a peripheral device, the hardware unit is connected to the circuit board through a slot. For example, the hardware unit is connected to the slot, and the slot is connected to the circuit board, so that the hardware unit is connected to the circuit board. The slot is a fitting slot on a connector or a fitting slot on the circuit board. If the slot is a fitting slot on a connector, the hardware unit is connected to the slot, and the connector is connected to an interface of the circuit board, so that the fitting slot is indirectly connected to the circuit board through the connector. If the slot is a fitting slot on the circuit board, the slot is directly connected to the circuit board. If the slot supports wired connection, the hardware device is connected to the slot in a wired manner. If the slot supports insertion connection, the hardware device is located in the slot.

In a possible implementation, if the hardware unit is a peripheral device, and the to-be-allocated resource is a bandwidth, the first resource amount is equal to a maximum resource amount corresponding to the slot. For example, the resource is a bandwidth, and the maximum resource amount corresponding to the slot is a maximum bandwidth supported by the slot.

In a possible implementation, the circuit board includes a plurality of processors. The hardware unit is a first processor in the plurality of processors, and the first processor is any processor in the plurality of processors. In this case, the resource is a bus or an MMIO address, and the first resource amount corresponding to the hardware unit is equal to a total resource amount of the resource divided by a total quantity of the plurality of processors. For example, the resource is a bus. The circuit board is provided with 100 buses. The circuit board includes five processors. In this case, a first resource amount corresponding to each processor is 20. For example, the resource is an MMIO address. A size of an MMIO address space provided by the circuit board is 200. The circuit board includes five processors. In this case, the first resource amount corresponding to each processor is 40.

302: The BIOS obtains a second resource amount corresponding to the hardware unit, where the second resource amount is a resource amount requested by the hardware unit.

In a possible implementation, when the hardware unit is a peripheral device, if the hardware unit does not include a hardware subunit, the second resource amount is equal to a maximum resource amount corresponding to the hardware unit. The maximum resource amount corresponding to the hardware unit is a maximum resource amount that may be requested by the hardware unit in a working process, or may be understood as a maximum resource amount of the resource required by the hardware unit in a working process, or a maximum resource amount of the resource supported by the hardware unit. For example, the resource is a bandwidth, and a maximum bandwidth supported by the hardware unit is X8. In this case, a maximum bandwidth required by the hardware unit in the working process is X8, and the second resource amount is X8.

When the hardware unit is a peripheral device, it is assumed that the hardware unit includes a plurality of hardware subunits. For example, the hardware device is a PCIe device. If the PCIe device includes a plurality of chips, each chip in the PCIe device is one hardware subunit.

If the hardware unit includes a plurality of hardware subunits, and the second resource amount includes a plurality of third resource amounts, each third resource amount corresponds to one hardware subunit in the plurality of hardware subunits, and each third resource amount is a maximum resource amount corresponding to the corresponding hardware subunit. A maximum resource amount corresponding to a hardware subunit is a maximum resource amount requested by the hardware subunit. For example, the maximum resource amount requested by the hardware subunit is a maximum resource amount that may be requested by the hardware subunit in a working process; or may be understood as a maximum resource amount of the resource required by the hardware subunit in a working process. For example, the resource is a bandwidth, and a maximum bandwidth supported by the hardware subunit is X2. In this case, a maximum bandwidth required by the hardware unit in a working process is X2, and a third resource amount corresponding to the hardware subunit is X2. It should be noted that maximum resource amounts corresponding to all hardware subunits of the hardware unit may be the same or different. Correspondingly, values of the plurality of third resource amounts included in the second resource amount may be the same or different.

In another possible implementation, when the circuit board is located in a computer device, and the hardware unit is a processor, at least one peripheral device of the computer device is mounted on the hardware unit. The at least one peripheral device may be peripheral devices of a same type or may be peripheral devices of different types. For example, the at least one peripheral device includes at least one of the following peripheral devices: a PCI device, a PCIe device, or a hard disk drive. The circuit board is connected to the at least one peripheral device through at least one slot. For example, the circuit board is connected to one peripheral device in the at least one peripheral device through each slot in the at least one slot.

When the slot has a hot plug function, if the slot is hot plugged, the slot occupies a bus. Therefore, when the hardware unit is a processor, if the resource is a bus, the second resource amount is equal to a sum of a total resource amount requested by the at least one peripheral device and a fourth resource amount. The fourth resource amount is a total resource amount pre-allocated by the BIOS for a hot plug function of a target slot, and the target slot is a slot, in the at least one slot, that has a hot plug function.

The at least one peripheral device may include a peripheral device that does not include a hardware subunit, or may include a peripheral device that includes a hardware subunit. For ease of description, the peripheral device, in the at least one peripheral device, that does not include a hardware subunit is referred to as a first peripheral device, and a peripheral device, in the at least one peripheral device, that includes a hardware subunit is referred to as a second peripheral device. Each hardware subunit in each first peripheral device or each second peripheral device needs at least one bus when working. Therefore, the total resource amount requested by the at least one peripheral device is equal to a sum of a first quantity and a second quantity. The first quantity is a total quantity of first peripheral devices in the at least one peripheral device, and the second quantity is a total quantity of hardware subunits in a second peripheral device in the at least one peripheral device.

When the hardware unit is a processor, if the resource is an MMIO address, the second resource amount is equal to a sum of resource amounts requested by the at least one peripheral device. In this case, a resource amount requested by each peripheral device is a maximum workload requested by each peripheral device in a working process. For the first peripheral device in the at least one peripheral device, a resource amount requested by the first peripheral device is a maximum resource amount corresponding to the first peripheral device. For the second peripheral device in the at least one peripheral device, a resource amount requested by the second peripheral device is a sum of maximum resource amounts corresponding to the hardware units in the second peripheral device.

303: The BIOS allocates a resource to the hardware unit based on the first resource amount and the second resource amount.

In this embodiment of this application, the BIOS of the circuit board automatically allocates a resource to the hardware unit based on the resource amount pre-allocated by the circuit board for the hardware unit and the resource amount requested by the hardware unit. In this way, the BIOS can allocate the resource to the hardware unit without being upgraded, which reduces maintenance costs of the BIOS.

A manner in which a BIOS obtains a first resource amount corresponding to a hardware unit includes either of the following Manner A and Manner B.

Manner A: The BIOS obtains, from a circuit board or a hardware unit, a first resource amount corresponding to a hardware unit.

Manner B: The BIOS obtains, through a resource manager on a circuit board, a first resource amount corresponding to a hardware unit.

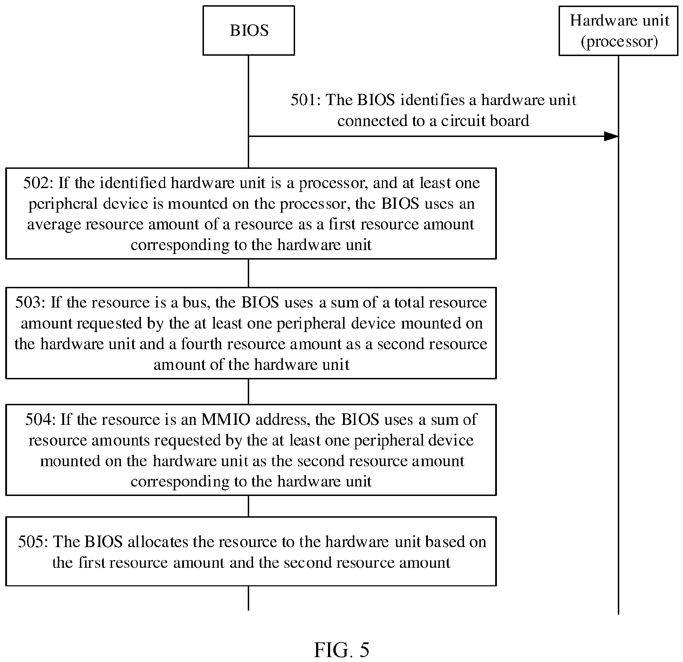

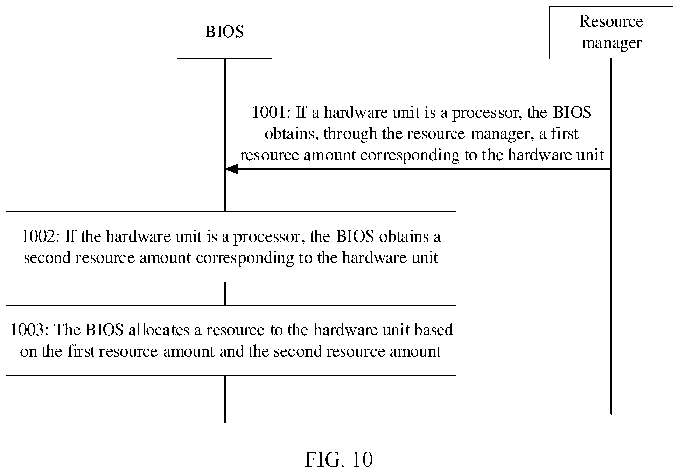

In Manner A, a process in which the BIOS obtains a first resource amount corresponding to a hardware unit varies among different types of hardware units. The following describes in detail, with reference to an embodiment shown in FIG. 4, a process in which the BIOS obtains a first resource amount corresponding to a hardware unit when the hardware unit is a peripheral device. With reference to an embodiment shown in FIG. 5, a process in which the BIOS obtains a first resource amount corresponding to a hardware unit when the hardware unit is a processor is described in detail. Manner B is described in detail with reference to an embodiment shown in FIG. 10.

FIG. 4 is a flowchart of a resource allocation method when a hardware unit is a peripheral device according to an embodiment of this application. A circuit board is connected to a hardware unit. The hardware unit is configured to provide a hardware resource. The method is applied to a BIOS of the circuit board. The method includes the following steps 401 to 404.

401: The BIOS identifies a hardware unit connected to the circuit board.

The hardware unit is any hardware unit connected to the circuit board. During booting, the BIOS obtains configuration information of each hardware unit connected to the circuit board, and identifies each hardware unit by using the configuration information of each hardware unit, to determine a type of each hardware unit. For ease of description, one hardware unit is used as an example herein. Configuration information of the hardware unit is described as follows:

If the hardware unit is a peripheral device, and the hardware unit does not include a hardware subunit, the configuration information of the hardware unit includes at least one of a maximum resource amount corresponding to the hardware unit, an identifier of an interface connected to the hardware unit on the circuit board, and an identifier of the hardware unit. The maximum resource amount corresponding to the hardware unit is a maximum resource amount of a resource supported by the hardware unit, or may be understood as a maximum resource amount of the resource required by the hardware unit in a working process.

If the hardware unit is a peripheral device, and the hardware unit includes a plurality of hardware subunits, the configuration information of the hardware unit further includes configuration information of the plurality of hardware subunits. Configuration information of each hardware subunit includes at least one of a maximum resource amount corresponding to a corresponding hardware subunit and an identifier of the corresponding hardware subunit.

If the hardware unit is a processor, the configuration information of the hardware unit includes at least one of an identifier of the hardware unit, an identifier of at least one interface, and at least one piece of link information. The at least one interface is an interface on the circuit board, and the at least one interface is configured to connect to a peripheral device mounted on the processor. Each piece of link information corresponds to one of the at least one interface, and each piece of link information indicates a link between the hardware unit and the corresponding interface. If a link is implemented by using a bridge, and the link includes at least one bridge, link information corresponding to the link includes an identifier of the at least one bridge. If an interface connected to the link is used to connect to a PCIe device, the at least one bridge is a PCIe bridge; or if the interface connected to the link is used to connect to a SAS hard disk drive, the at least one bridge is a SAS bridge.

A process of identifying the hardware unit is described as follows:

The BIOS stores configuration information of the circuit board. The configuration information of the circuit board includes a maximum quantity of processors supported by the circuit board, configuration information of a plurality of processors on the circuit board, configuration information of each interface, and an identifier of the circuit board. The plurality of processors are processors connected to the circuit board. A total quantity of the plurality of processors is less than or equal to the maximum quantity of processors supported by the circuit board. The configuration information of each interface includes a maximum resource amount corresponding to a corresponding interface and an identifier of the corresponding interface. A maximum resource amount corresponding to each interface is a maximum resource amount supported by the corresponding interface. For example, a maximum bandwidth supported by an interface is X8, and a maximum resource amount corresponding to the interface is X8.

The BIOS obtains the identifier of the hardware unit from the hardware unit, and determines, based on the identifier of the hardware unit and the configuration information of the circuit board, whether the hardware unit is a processor. For example, for configuration information of any processor in the configuration information of the circuit board, if the identifier of the hardware unit is the same as an identifier of the processor in the configuration information of the any processor, the hardware unit is a processor.

When booted, the BIOS identifies a hardware unit connected to each interface on the circuit board. For ease of description, one interface on the circuit board is used as an example to describe a process of identifying a hardware unit connected to the interface, where the process includes the following steps 4011 to 4013.

Step 4011: If the interface is not connected to a connector, the BIOS enables a link between the processor and the interface.

If the interface is not connected to a hardware unit (for example, a peripheral device) through a connector, and is directly connected to the hardware unit, the interface is not connected to a connector, and the link between the processor and the interface is a link between the processor and the hardware unit. If the interface is connected to a hardware unit (for example, a peripheral device) through a connector, the interface is connected to the connector.

The BIOS searches the configuration information of the circuit board for a processor corresponding to the interface, and the BIOS sends configuration information of the processor in the configuration information of the circuit board to the processor. Because a link between the processor and the interface has been established in advance, the processor enables the link between the processor and the interface based on link information corresponding to the interface in the configuration information of the processor.

In a possible implementation, the processor includes a control register. The BIOS sends the configuration information of the processor to the control register, and the control register stores the configuration information of the processor. The processor enables the link between the processor and the interface based on the link information corresponding to the interface that is in the configuration information of the processor stored in the control register.

Step 4012: If the interface is connected to a connector, the BIOS establishes a link between the processor and each fitting slot on the connector.

For each fitting slot on the connector, the link between the processor and each fitting slot includes the link between the processor and the interface and a link between the interface and each fitting slot. Each fitting slot on the connector can be connected to the hardware unit (for example, a peripheral device), and the link between the processor and each fitting slot is a link between the processor and the hardware unit connected to each fitting slot.

The BIOS reads configuration information of the connector from the connector. For example, the configuration information of the connector is stored in a CPLD of the connector, and the BIOS reads the configuration information of the connector from the CPLD of the connector. The configuration information of the connector includes a device type of the connector, a quantity of fitting slots on the connector, and configuration information of each fitting slot on the connector. A device type of the connector is, for example, a riser card or a hard disk drive backplane. The configuration information of each fitting slot includes an identifier of each fitting slot and a maximum resource amount corresponding to each fitting slot. The maximum resource amount of each fitting slot is a maximum resource amount of the resource supported by each fitting slot, that is, a maximum resource amount of the resource required by each fitting slot in a working process. In a possible implementation, for any fitting slot on the connector, if the any fitting slot has a hot plug function, configuration information of the any fitting slot further includes a target identifier, where the target identifier indicates that the any fitting slot has the hot plug function.

The BIOS sends the read configuration information of the connector to the processor. If the BIOS does not send the configuration information of the processor to the processor, the BIOS sends the configuration information of the processor and the configuration information of the connector together to the processor (for example, the control register in the processor). The processor establishes the link between the processor and each fitting slot on the connector based on the configuration information of the connector. For example, the processor enables the link between the processor and the interface. Specifically, the processor establishes a link between the interface and each fitting slot on the connector based on the configuration information of the connector, so that the link between the processor and each fitting slot is established.

Step 4013: For any link corresponding to the interface, the BIOS performs a scanning operation on the any link, where the scanning operation is used to determine through scanning whether a peripheral device is connected over the link.

If the interface is not connected to the connector, the any link is a link between the processor and the interface. If the interface is connected to the connector, the any link is a link between the processor and any fitting slot on the connector.

The BIOS scans the any link. If the scanning succeeds, it indicates that a hardware unit is connected over the any link, and the connected hardware unit is identified as a peripheral device. If the scanning fails, it indicates that no hardware unit is connected over the any link.

In a possible implementation, the BIOS can further allocate a temporary resource to the successfully scanned hardware unit, so that the BIOS can access the hardware unit based on the temporary resource allocated to the hardware unit. For example, the circuit board provides a plurality of buses and a plurality of MMIO addresses, and each MMIO address indicates one address space. If the scanning succeeds, that is, there is the hardware unit, the BIOS allocates one of the plurality of buses to the hardware unit, and allocates one of the plurality of MMIO addresses to the hardware unit. The bus and the MMIO address allocated to the hardware unit are both temporary resources allocated to the hardware unit, so that the BIOS can access the hardware unit based on the bus allocated to the hardware unit, or access, in a manner similar to that of accessing a memory, the hardware unit based on the MMIO address allocated to the hardware unit.

In a possible implementation, the BIOS establishes a correspondence between any bus in the plurality of buses and the hardware unit, to allocate the any bus to the hardware unit. The BIOS maps, by establishing a correspondence between any MMIO address in the plurality of MMIO addresses and the hardware unit, the hardware unit to an address space indicated by the any MMIO address, to allocate the any MMIO address to the hardware unit.

402: If the identified hardware unit is a peripheral device, and the hardware unit is connected to the circuit board through a slot, the BIOS obtains and uses as a first resource amount corresponding to the hardware unit, a maximum resource amount corresponding to the slot through which the hardware unit is connected to the circuit board. The first resource amount is a resource amount pre-allocated by the circuit board to the hardware unit.

The slot may be a fitting slot on the connector or a fitting slot on the circuit board. If the slot is a fitting slot on the connector, the BIOS reads, from the connector, a maximum resource amount corresponding to the fitting slot.

For example, the BIOS accesses the connector, reads, from the configuration information of the connector, the maximum resource amount corresponding to the slot, and uses the read maximum resource amount corresponding to the slot as the first resource amount. For another example, if the BIOS has stored the configuration information of the connector in the control register in the processor, the BIOS obtains the maximum resource amount corresponding to the slot from the configuration information of the connector stored in the control register, and determines the obtained maximum resource amount corresponding to the slot as the first resource amount.

If the slot is a fitting slot on the circuit board, the BIOS uses the slot as an interface on the circuit board, searches the configuration information of the circuit board for configuration information of the interface, obtains a maximum resource amount corresponding to the interface from the configuration information of the interface, and determines the maximum resource amount corresponding to the interface as the first resource amount.

403: The BIOS reads, from the hardware unit, a second resource amount corresponding to the hardware unit. The second resource amount is a resource amount requested by the hardware unit.

In a possible implementation, after allocating the bus to the hardware unit, the BIOS accesses, based on the bus allocated to the hardware unit, configuration information stored at a first address in a configuration space of the hardware unit, and reads the second resource amount from the configuration information stored at the first address.

If the hardware unit does not include a hardware subunit, the configuration information stored at the first address is the configuration information of the hardware unit; or if the hardware unit includes a plurality of hardware subunits, the configuration information stored at the first address is configuration information of a 1^{st} hardware subunit in the plurality of hardware subunits. In a possible implementation, if the hardware unit includes a plurality of hardware subunits, the BIOS has no permission to access configuration information of a hardware subunit in the plurality of hardware units other than the 1^{st} hardware subunit. In this case, the configuration information stored at the first address may be the configuration information of the hardware unit, or may be configuration information of the 1^{st} hardware subunit in the hardware unit.

It is assumed that the hardware unit includes a plurality of hardware subunits, and the second resource amount includes a third resource amount. In this case, to read a plurality of third resource amounts when the hardware unit includes a plurality of hardware subunits, the BIOS determines, based on the first resource amount and a maximum resource amount in the configuration information that is stored at the first address, whether the hardware unit includes a hardware subunit, for example, the following steps 4031 to 4033 are performed.

Step 4031: The BIOS reads a target resource amount from the first address of the hardware unit, where the target resource amount is a maximum resource amount corresponding to the resource in the configuration information stored at the first address.

If the hardware unit does not include a hardware subunit, the target resource amount is the maximum resource amount corresponding to the hardware unit. If the hardware unit includes a plurality of hardware subunits, the target resource amount is a maximum resource amount corresponding to the 1^{st} hardware subunit in the plurality of hardware subunits. In this case, the BIOS is not sure whether the hardware unit includes a hardware subunit or not, and still needs to perform the following steps 4032 and 4033 to determine whether the hardware unit includes a hardware subunit.

Step 4032: If the first resource amount is greater than the target resource amount, the BIOS creates at least two logical interfaces for the hardware unit based on a multiple between the first resource amount and the target resource amount, where a quantity of at least two logical interfaces is equal to the multiple, and each logical interface is configured to mount one hardware subunit in the hardware unit.

If the first resource amount is greater than the target resource amount, the hardware unit may include a hardware subunit, or may not include a hardware subunit. If the hardware unit is a peripheral device, the first resource amount is a maximum resource amount that can be allocated by the BIOS to the hardware unit. To determine whether the hardware unit includes a hardware subunit, the BIOS assumes that the hardware unit includes a plurality of hardware subunits, and a maximum resource amount corresponding to each hardware subunit is a target resource amount. In this case, the BIOS creates at least two logical interfaces for the hardware unit based on a multiple of the first resource amount and the target resource amount, and may subsequently determine, based on a condition of mounting the hardware subunit on the at least two logical interfaces, whether the hardware unit includes a hardware subunit.

In a possible implementation, the at least two logical interfaces are generated based on the multiple of the first resource amount and the target resource amount, and correspondences between the at least two logical interfaces and the hardware unit are established, so that the at least two logical interfaces are created for the hardware unit.

Step 4033: The BIOS separately performs a subunit mounting operation on the at least two logical interfaces, where the subunit mounting operation is used to mount a hardware subunit on the logical interface.

In a possible implementation, the BIOS establishes a link between the logical interface and the processor, and configures the link, so that through the link, a device mounted on the link can be accessed, thereby implementing the subunit mounting operation. For example, the following steps 40331 and 40332 are performed.

Step 40331: The BIOS establishes at least two first links based on the at least two logical interfaces, where each first link corresponds to one logical interface, and each first link is used for communication between the processor and the corresponding logical interface.

Each first link is a link between the processor and the corresponding logical interface.

In a possible implementation, a correspondence between each logical interface and a second link is established, and the correspondence indicates the first link on which each logical interface is located. The second link is a link between the processor and the hardware unit.

Step 40332: The BIOS establishes mapping relationships between the at least two logical interfaces, the at least two second links, and at least two second addresses, where each second address is an address allocated by the BIOS to a hardware subunit mounted on a corresponding logical interface.

The second address is an MMIO address pre-allocated to the hardware subunit mounted on the corresponding logical interface.

For each of the at least two logical interfaces, the BIOS allocates an MMIO address to each logical interface, and uses the MMIO address allocated to each logical interface as a second address. After the BIOS allocates the MMIO address to each logical interface, a hardware subunit existing in the hardware unit can be mapped to an address space indicated by the MMIO address of each logical interface.

In addition, the BIOS may further allocate a bus to each logical interface, to subsequently access a hardware subunit corresponding to the logical interface by using the bus. The bus and the MMIO address allocated to each logical interface are temporary resources allocated to each logical interface. It should be noted that a manner in which the BIOS allocates a temporary resource to each logical interface is similar to a manner in which the BIOS allocates a temporary resource to the hardware unit in step 4012. The manner in which the BIOS allocates a temporary resource to each logical interface is not described herein again in this embodiment of this application.

After the BIOS separately performs a subunit mounting operation on the at least two logical interfaces, the BIOS queries whether a hardware subunit is successfully mounted on each of the at least two logical interfaces. If a hardware subunit is successfully mounted on each of a plurality of logical interfaces in the at least two logical interfaces, the hardware unit includes the plurality of hardware subunits. If a hardware subunit is successfully mounted on only one logical interface in the at least two logical interfaces, and other logical interfaces fail in mounting, it indicates that the hardware subunit that is mounted on the logical interface is the hardware unit, that is, the hardware unit does not include a hardware subunit.

For ease of description, one logical interface in the at least two logical interfaces is used as an example to describe below a query by the BIOS of whether a hardware subunit is successfully mounted on the logical interface.

The BIOS determines, based on a mapping relationship between the at least two logical interfaces, the at least two first links, and at least two buses, a first link corresponding to each logical interface and a bus allocated to each logical interface. For any logical interface in the at least two logical interfaces, the BIOS accesses, by using an MMIO address allocated to the logical interface, a first link corresponding to the logical interface, and accesses a configuration space of the hardware unit through the first link. If an identifier of the hardware subunit can be found in the configuration space, the hardware subunit is successfully mounted on the logical interface. If the identifier of the hardware subunit is not found in the configuration space, it indicates that the logical interface fails in mounting.

After it is determined whether the hardware unit includes a hardware subunit, if the hardware unit does not include a hardware subunit, the target resource amount read from the first address is a maximum resource amount corresponding to the hardware unit, and the target resource amount is used as the second resource amount of the hardware unit.

If the hardware unit includes a plurality of hardware subunits, the target resource amount is a maximum resource amount corresponding to the 1^{st} hardware subunit in the plurality of hardware subunits, and the BIOS uses the target resource amount as a third resource amount corresponding to the 1^{st} hardware subunit. For any hardware subunit other than the 1^{st} hardware subunit in the plurality of hardware subunits, the BIOS determines, based on the mapping relationship between the at least two logical interfaces, the at least two first links, and the at least two buses, a first link corresponding to a logical interface on which the any hardware subunit is mounted and a bus second address allocated to the logical interface; accesses the corresponding first link by using the bus allocated to the logical interface; accesses a configuration space in the hardware unit through the first link; reads, from the configuration space, a maximum resource amount corresponding to the any hardware subunit; and uses the read maximum resource amount corresponding to the any hardware subunit as a third resource amount corresponding to the any hardware subunit.

After a third resource amount corresponding to each hardware subunit in the hardware unit is obtained, the second resource amount corresponding to the hardware unit is obtained.

The foregoing steps 4031 to 4033 are described by using an example in which the BIOS has the permission to access the configuration information of the 1^{st} hardware subunit in the plurality of hardware units if the hardware unit includes a plurality of hardware subunits. In another possible implementation, if the hardware unit includes a plurality of hardware subunits, the BIOS has the permission to access configuration information of each hardware subunit in the plurality of hardware units. In this case, the configuration information stored at the first address in the hardware unit may include the configuration information of each hardware subunit in the plurality of hardware units. In this case, the BIOS can access the first address in the hardware unit, read, from the first address, a maximum resource amount corresponding to each hardware subunit in the hardware unit, and use the maximum resource amount corresponding to each hardware subunit as the third resource amount.

404: The BIOS allocates the resource to the hardware unit based on the first resource amount and the second resource amount.

The resource is a bandwidth. If the first resource amount is greater than or equal to the second resource amount, and the hardware unit does not include a hardware subunit, the BIOS allocates a resource of the first resource amount to the hardware unit, or allocates a resource of the second resource amount to the hardware unit, so that the resource allocated to the hardware unit can meet a working requirement of the hardware unit.

If the second resource amount includes a plurality of third resource amounts, and the first resource amount is greater than or equal to a sum of the plurality of third resource amounts, the BIOS separately allocates a resource corresponding to the third resource amount to each hardware subunit in the hardware unit, so that sufficient resources can be allocated to each hardware subunit in the hardware unit, to meet a working requirement of each hardware unit.

In the method provided by this embodiment of this application, the BIOS of the circuit board automatically allocates a resource to the hardware unit based on the resource amount pre-allocated by the circuit board for the hardware unit and the resource amount requested by the hardware unit. In this way, the BIOS can allocate the resource to the hardware unit without being upgraded, which reduces maintenance costs of the BIOS.

FIG. 5 is a flowchart of a resource allocation method when a hardware unit is a processor according to an embodiment of this application. A circuit board is connected to a hardware unit. The hardware unit is configured to provide a hardware resource. The method is applied to a BIOS of the circuit board. The method includes the following steps 501 to 505.

501: The BIOS identifies a hardware unit connected to the circuit board.

This step 501 is similar to the foregoing step 401. Details of step 501 are not described herein again in this embodiment of this application.

502: If the identified hardware unit is a processor, and at least one peripheral device is mounted on the processor, the BIOS uses an average resource amount of the resource as a first resource amount corresponding to the hardware unit.

The average resource amount is a total resource amount of the resource divided by a total quantity of a plurality of processors on the circuit board.

In a possible implementation, configuration information of the circuit board stores the average resource amount. The BIOS obtains the average resource amount from the configuration information, and uses the average resource amount as the first resource amount corresponding to the hardware unit.

In another possible implementation, the configuration information of the circuit board stores the total quantity of the plurality of processors on the circuit board and the total resource amount of the resource. The BIOS divides the total resource amount by the total quantity to obtain the average resource amount, and uses the average resource amount as the first resource amount of the hardware unit.

503: If the resource is a bus, the BIOS uses a sum of a total resource amount requested by the at least one peripheral device mounted on the hardware unit and a fourth resource amount as a second resource amount of the hardware unit.

The fourth resource amount is a total resource amount pre-allocated by the BIOS for a hot plug function of a target slot, and the target slot is a slot, in at least one slot, that has a hot plug function. The total resource amount requested by the at least one peripheral device is equal to a sum of a first quantity and a second quantity. The first quantity is a total quantity of first peripheral devices in the at least one peripheral device. The second quantity is a total quantity of hardware subunits in a second peripheral device in the at least one peripheral device. The first peripheral device is a peripheral device, in the at least one peripheral device, that does not include a hardware subunit. The second peripheral device is a peripheral device, in the at least one peripheral device, that includes a hardware subunit.

Each first peripheral device occupies one bus in a working process, and each hardware subunit in the second peripheral device also occupies one bus in a working process. When the resource is a bus, the total resource amount subsequently requested by the at least one peripheral device in a working process may reach the sum of the total quantity (namely, the first quantity) of first peripheral devices in the at least one peripheral device and the total quantity (namely, the second quantity) of hardware subunits in the second peripheral device. Therefore, when the resource is a bus, the total resource amount requested by the at least one peripheral device is equal to the sum of the first quantity and the second quantity.

In addition, for the target slot having a hot plug function, a user may subsequently perform a hot plug on the target slot, and during a hot plug, the target slot requests a specific quantity of buses. Therefore, the BIOS first reserves buses of the fourth resource amount for the hot plug function of the target slot in the at least one slot. It may be understood that the fourth resource amount is the total resource amount of the resource requested by the target slot in the at least one slot, where there are one or more target slots in the at least one slot.

Because the at least one peripheral device is mounted on the hardware unit through the at least one slot, a sum of a bus requested by the at least one peripheral device and a bus requested by the target slot is the resource amount requested by the hardware unit. In this case, the second resource amount corresponding to the hardware unit is equal to the sum of the total resource amount requested by the at least one peripheral device and the fourth resource amount.

Before performing step 503, the BIOS first obtains the total resource amount requested by the at least one peripheral device and the fourth resource amount, for example, a process shown in the following steps 5031 to 5034 are performed.

Step 5031: The BIOS counts the total quantity of the first peripheral devices in the at least one peripheral device to obtain the first quantity.

In a possible implementation, the BIOS searches configuration information of the hardware unit for at least one interface corresponding to the hardware unit. The BIOS counts the total quantity of first peripheral devices starting from 0. For any interface in the at least one interface that is found, if a second resource amount corresponding to a peripheral device connected to the any interface has been obtained, it indicates that the peripheral device connected to the any interface is mounted on the hardware unit. For any peripheral device connected to the any interface, if a second resource amount corresponding to the any peripheral device is a maximum resource amount corresponding to the any peripheral device, it indicates that the any peripheral device does not include a hardware subunit, and the any peripheral device is a first peripheral device. In this case, a count of a total quantity of first peripheral devices is increased by 1. If the second resource amount corresponding to the any peripheral device includes a plurality of third resource amounts, it indicates that the any peripheral device includes a plurality of hardware subunits, and the any peripheral device is a second peripheral device. In this case, the count of the total quantity of first peripheral devices remains unchanged.

If a second resource amount corresponding to each peripheral device connected to the any interface is not obtained, the BIOS identifies each peripheral device connected to the any interface. Each time a peripheral device is successfully identified, it indicates that the successfully identified peripheral device is mounted on the hardware unit. The BIOS determines, based on a maximum resource amount stored at a first address in the peripheral device and a first resource amount corresponding to the peripheral device, whether the peripheral device includes a hardware subunit. If the peripheral device does not include a hardware subunit, the peripheral device is a first peripheral device, and the count of the total quantity of first peripheral devices is increased by 1. If the peripheral device includes a plurality of hardware subunits, the peripheral device is a second peripheral device, and the count of the total quantity of first peripheral devices remains unchanged.

According to the foregoing manner, after the BIOS has completed a search for at least one interface corresponding to the processor, a count result of the total quantity of first peripheral devices is the first quantity.

Step 5032: The BIOS counts the total quantity of the hardware subunits in the second peripheral device in the at least one peripheral device to obtain the second quantity.

In a possible implementation, the BIOS searches the configuration information of the hardware unit for the at least one interface corresponding to the hardware unit. The BIOS counts a total quantity of second peripheral devices starting from 0. For any interface in the at least one interface that is found, it is assumed that a second resource amount corresponding to each peripheral device connected to the any interface has been obtained. For any hardware unit connected to the any interface, if a second resource amount corresponding to the any peripheral device is a maximum resource amount corresponding to the any peripheral device, it indicates that the any peripheral device does not include a hardware subunit, and the any peripheral device is a first peripheral device. In this case, the count of the total quantity of second peripheral devices remains unchanged. If the second resource amount corresponding to the any peripheral device includes a plurality of third resource amounts, it indicates that the any peripheral device includes a plurality of hardware subunits, and the any peripheral device is a second peripheral device. In this case, the count of the total quantity of second peripheral devices is increased by a total quantity of hardware subunits in the any hardware unit.

If the second resource amount corresponding to each peripheral device connected to the any interface is not obtained, each peripheral device connected to the any interface is identified. Each time a peripheral device is successfully identified, the BIOS determines, based on the maximum resource amount stored at the first address in the peripheral device and a first resource amount corresponding to the peripheral device, whether the peripheral device includes a hardware subunit. If the peripheral device does not include a hardware subunit, the peripheral device is a first peripheral device, and the count of the total quantity of second peripheral devices remains unchanged. If the peripheral device includes a plurality of hardware subunits, the peripheral device is a second peripheral device, and the count of the total quantity of second peripheral devices is increased by a total quantity of hardware subunits in the hardware unit.

According to the foregoing manner, after the BIOS has completed a search for the at least one interface corresponding to the processor, a count result of the total quantity of second peripheral devices is the second quantity.

It should be noted that, a process in which the BIOS identifies the peripheral device is described in the foregoing step 401, and a process in which the BIOS determines, based on the first resource amount and a maximum resource amount that is in configuration information stored at the first address in the peripheral device, whether the peripheral device includes a hardware subunit is described in step 403. Herein, a process, in step 5031, in which the BIOS identifies each peripheral device connected to the any interface and a process, in step 5032, in which the BIOS determines, based on the maximum resource amount stored at the first address in the peripheral device and the first resource amount corresponding to the peripheral device, whether the peripheral device includes a hardware subunit are not described again in this embodiment of this application.

The foregoing is described by using an example in which the total quantity of first peripheral devices and the total quantity of hardware subunits are separately counted. The BIOS may alternatively perform step 5032 first, and then perform step 5031. Herein, an execution sequence of steps 5031 and 5032 is not limited in this embodiment of this application. In another possible implementation, the BIOS may count the total quantity of first peripheral devices and the total quantity of second peripheral devices at the same, or at different times. For example, each time the BIOS determines that a peripheral device is the first peripheral device, the total quantity of first peripheral devices is increased by 1, and each time the BIOS determines that a peripheral device is the second peripheral device, the total quantity of second peripheral devices is increased by a total quantity of hardware subunits in the peripheral device.

Step 5033: The BIOS uses a sum of the first quantity and the second quantity that are counted as the total resource amount requested by the at least one peripheral device.

The foregoing is described by using an example in which the first quantity and the second quantity are separately counted, and then the first quantity and the second quantity are used as the total resource amount requested by the at least one peripheral device. In another possible implementation, the total resource amount requested by the at least one peripheral device is directly counted. For example, the BIOS starts to count starting from 0, and searches for the at least one peripheral device in the manner in step 5031 or step 5032. In a search process, each time the BIOS determines that a peripheral device is the first peripheral device, the count is increased by 1, and each time the BIOS determines that a peripheral device is the second peripheral device, the count is increased by a total quantity of hardware subunits in the peripheral device. After the search for the at least one peripheral device is completed, a final counting result is the total resource amount requested by the at least one peripheral device.

Step 5034: The BIOS determines the fourth resource amount based on a quantity of target slots in the at least one slot.

In a possible implementation, the BIOS counts the quantity of target slots in the at least one slot, to obtain a third quantity. Considering that when a hot plug is performed on a single target slot, a maximum resource amount of a bus requested by the single target slot is a fifth resource amount, the BIOS uses a product of the fifth resource amount and the third quantity as the fourth resource amount. A value of the fifth resource amount may vary with slots in different application scenarios. A value range of the fifth resource amount is not limited in this embodiment of this application.

The third quantity is the quantity of target slots in the at least one slot. The following describes a process in which the BIOS counts the quantity of target slots in the at least one slot as follows:

In a possible implementation, the BIOS counts the quantity of target slots starting from 0. For any slot in the at least one slot, when a control register of the hardware unit stores configuration information of a connector, the BIOS obtains configuration information of the slot from the configuration information of the connector in the control register.

When the control register of the hardware unit does not store the configuration information of the connector, if the slot is a fitting slot on the connector, the BIOS accesses the connector, and reads configuration information of the slot from the configuration information of the connector. If the any one slot is a fitting slot on the circuit board, the any one slot is an interface on the circuit, and the BIOS obtains configuration information of the slot from the configuration information of the circuit board.

After the configuration information of the slot is obtained, if the configuration information of the slot includes a target identifier, it indicates that the slot has a hot plug function, and the slot is a target slot. In this case, a count of the quantity of target slots is increased by 1. If the configuration information of the slot does not include the target identifier, it indicates that the slot does not have a hot plug function, and the slot is not a target slot. In this case, the count of the quantity of target slots remains unchanged.

According to the foregoing manner, after the BIOS has completed a search for the at least one slot, a counting result of the quantity of target slots is the third quantity.

After determining the total resource amount requested by the at least one peripheral device and the fourth resource amount, the BIOS uses the sum of the total resource amount requested by the at least one peripheral device and the fourth resource amount as the second resource amount of the hardware unit.

It should be noted that the foregoing is described by using an example in which the total resource amount requested by the at least one peripheral device is first determined, and then the fourth resource amount is determined. In another implementation, the BIOS may alternatively determine the fourth resource amount first, and then determine the total resource amount requested by the at least one peripheral device; or determine the fourth resource amount and the total resource amount requested by the at least one peripheral device at the same time.

The foregoing is described by using an example in which the hot plug function of the interface occupies the bus. If another function of the interface may further occupy the bus, a quantity of buses that may be occupied by the another function is added to the resource amount requested by the interface. Similarly, if another function of the peripheral device may further occupy the bus, a quantity of buses that may be occupied by the another function is added to the resource amount requested by the peripheral device.

504: If the resource is an MMIO address, the BIOS uses a sum of resource amounts requested by at least one peripheral device mounted on the hardware unit as the second resource amount corresponding to the hardware unit.

In a possible implementation, step 5041 includes the following steps 5041 and 5042.

Step 5041: For each peripheral device in the at least one peripheral device, the BIOS obtains a resource amount requested by each peripheral device.

A hardware sub-device of the peripheral device may also request an MMIO address in a subsequent working process. Therefore, for each peripheral device in the at least one peripheral device, if the peripheral device does not include a hardware subunit, the BIOS uses a maximum resource amount corresponding to the peripheral device as a resource amount requested by the peripheral device, or if the peripheral device includes a plurality of hardware subunits, the BIOS uses a sum of maximum resource amounts corresponding to the plurality of hardware subunits as a resource amount requested by the peripheral device.

In a possible implementation, the BIOS searches the configuration information of the hardware unit for the at least one interface corresponding to the hardware unit. For any interface in the at least one interface that is found, if a second resource amount corresponding to each peripheral device connected to the any interface is not obtained currently, each peripheral device connected to the any interface is identified. Each time a peripheral device is successfully identified, it indicates that the peripheral device is mounted on the hardware unit, and a second resource amount corresponding to the peripheral device is obtained. Alternatively, after identifying at least one peripheral device connected to the at least one interface, the BIOS obtains a second resource amount corresponding to each of the at least one peripheral device.

If a second resource amount corresponding to at least one peripheral device connected to the any interface has been obtained currently, it indicates that the at least one peripheral device has been identified, and a second resource amount, that has been obtained previously, corresponding to each of the at least one peripheral device is obtained.

When the peripheral device does not include a hardware subunit, the second resource amount corresponding to the peripheral device is equal to the maximum resource amount corresponding to the peripheral device. When the peripheral device includes a plurality of hardware subunits, the second resource amount corresponding to the peripheral device includes a plurality of third resource amounts, and each third resource amount is a maximum resource amount corresponding to one hardware subunit. Therefore, for each peripheral device in the at least one peripheral device, after the second resource amount corresponding to the peripheral device is obtained, if the peripheral device does not include a hardware subunit, the second resource amount corresponding to the peripheral device is used as the resource amount requested by the peripheral device; or if the peripheral device includes a plurality of hardware subunits, a sum of the plurality of third resource amounts included in the second resource amount corresponding to the peripheral device is used as the resource amount requested by the peripheral device.

Step 5042: The BIOS uses the sum of resource amounts requested by the at least one peripheral device as the second resource amount corresponding to the hardware unit.

It should be noted that step 503 and step 504 are processes of obtaining the second resource amount corresponding to the hardware unit in cases of different resources, and step 503 and step 504 are parallel steps.

505: The BIOS allocates the resource to the hardware unit based on the first resource amount and the second resource amount.

In a possible implementation, if the first resource amount is less than the second resource amount, and a target processor exists in the plurality of processors, a redundant resource of the target processor is allocated to the hardware unit, so that the hardware unit is allocated a resource of the second resource amount. A resource amount of a resource pre-allocated by the circuit board to the target processor is greater than a resource amount requested by the target processor. It may be understood that the target processor is a processor whose corresponding first resource amount is greater than a corresponding second resource amount in the plurality of processors.

If the first resource amount is less than the second resource amount, a difference between the second resource amount and the first resource amount is referred to as a sixth resource amount. There is at least one target processor in the plurality of processors. If there is a target processor whose redundant resource amount is greater than or equal to the sixth resource amount in the at least one target processor, the BIOS reclaims a resource of the sixth resource amount in the redundant resource amount of the target processor, and allocates, to the hardware unit, the resource of the sixth resource amount in the redundant resource amount of the target processor and a resource of the second resource amount pre-allocated to the hardware unit, so that the hardware unit can be allocated the resource of the second resource amount. The redundant resource amount of the target processor is a difference between a second resource amount corresponding to the target processor and the first resource amount corresponding to the target processor. For example, if the first resource amount corresponding to the hardware unit is 64, and the second resource amount corresponding to the hardware unit is 72, the sixth resource amount is 8. If a redundant resource amount of a target processor 1 in the at least one target processor is greater than or equal to 8, eight resources of the target processor 1 are allocated to the hardware unit.

If there are a plurality of target processors in the plurality of processors, and there is no target processor whose redundant resource amount is greater than or equal to the sixth resource amount in the plurality of target processors, the BIOS reclaims a resource of the sixth resource amount from a redundant resource amount of at least one target processor in the plurality of target processors, and allocates the reclaimed resource of the sixth resource amount to the hardware unit. For example, if the first resource amount corresponding to the hardware unit is 64, and the second resource amount corresponding to the hardware unit is 72, the sixth resource amount is 8. If a redundant resource amount of a target processor 2 in the plurality of target processors is 5, or if a redundant resource amount of a target processor 3 in the plurality of target processors is 3, five resources of the target processor 2 and three resources of the target processor 3 are allocated to the hardware unit. Alternatively, if redundant resource amounts of target processors 4 to 7 in the plurality of target processors are all 3, two resources of each target processor in the target processors 4 to 7 are allocated to the hardware unit.

After a search of redundant resource amounts of the target processors on the circuit board is completed, if the hardware unit cannot be allocated the resource of the second resource amount, the BIOS determines a maximum resource amount that can be allocated to the hardware unit, where the maximum resource amount that can be allocated to the hardware unit is less than the second resource amount; disables at least one third peripheral device mounted on the hardware unit; and allocates, to the hardware unit, a resource of a seventh resource amount in the redundant resource amount of the target processor in the plurality of processors. A sum of resource amounts requested by the at least one third peripheral device is greater than or equal to the seventh resource amount. The seventh resource amount is a difference between the second resource amount corresponding to the hardware unit and the maximum resource amount that can be allocated to the hardware unit.

The disabling, by the BIOS, the at least one third peripheral device mounted on the hardware unit includes disabling, by the BIOS, a link between the processor and each third peripheral device.

In the method provided by this embodiment of this application, the BIOS of the circuit board automatically allocates a resource to the hardware unit based on the resource amount pre-allocated by the circuit board for the hardware unit and the resource amount requested by the hardware unit. In this way, the BIOS can allocate the resource to the hardware unit without being upgraded, which reduces maintenance costs of the BIOS. If the first resource amount is less than the second resource amount, and the target processor exists in the plurality of processors, a redundant resource of the target processor is allocated to the hardware unit, so that the hardware unit is allocated the resource of the second resource amount to meet a working requirement of the hardware unit, and subsequently, the hardware unit can work normally.

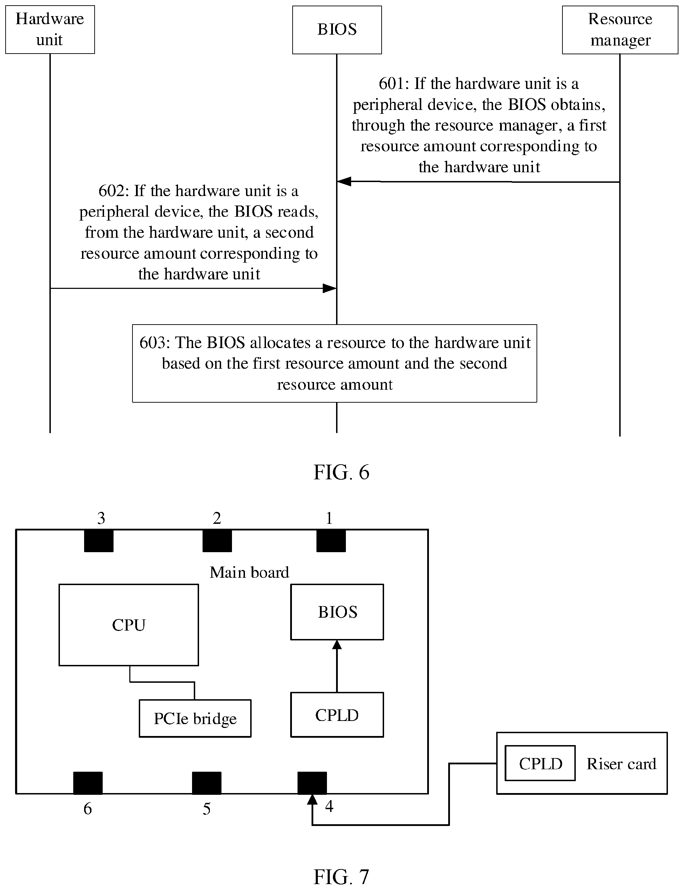

FIG. 6 is a flowchart of another resource allocation method when a hardware unit is a peripheral device according to an embodiment of this application. A circuit board is connected to a hardware unit. The circuit board includes a resource manager, and the resource manager is connected to a BIOS. The hardware unit is configured to provide a hardware resource. The method is applied to the BIOS of the circuit board. The method includes the following steps 601 to 603.

601: If the hardware unit is a peripheral device, the BIOS obtains, through the resource manager, a first resource amount corresponding to the hardware unit. The first resource amount is a resource amount pre-allocated by the circuit board to the hardware unit.

In a possible implementation, the hardware unit is connected to the circuit board through a slot, and the BIOS reads, through the resource manager, a maximum resource amount corresponding to a slot in which the hardware unit is located, and uses the read corresponding maximum resource amount of the hardware unit as the first resource amount corresponding to the hardware unit.

The following describes a process in which the BIOS reads, through the resource manager, the maximum resource amount corresponding to the slot in which the hardware unit is located.

In a possible implementation, if the circuit board is connected to a connector, the slot is a fitting slot on the connector, and the hardware unit is connected to the slot. The BIOS reads, from the connector through the resource manager, a maximum resource amount corresponding to the slot, and the BIOS uses the maximum resource amount corresponding to the slot as the first resource amount corresponding to the hardware unit. If the slot is a fitting slot on the circuit board, the hardware unit is connected to the slot, and the resource manager is connected to each of the BIOS and the slot. The BIOS obtains, through the resource manager, a maximum resource amount corresponding to the slot, and uses the maximum resource amount corresponding to the slot as the first resource amount corresponding to the hardware unit.

The reading, by the BIOS from the connector through the resource manager, the maximum resource amount corresponding to the slot includes: reading, by the BIOS from the resource manager by delivering an instruction to the resource manager, the maximum resource amount corresponding to the slot in which the hardware unit is located.

In a possible implementation, the BIOS reads, from the resource manager by delivering an instruction to the resource manager, the maximum resource amount corresponding to the slot in which the hardware unit is located in either of the following Manner C and Manner D.

Manner C: The BIOS sends a first obtaining request to the resource amount manager. The resource amount manager receives the first obtaining request, reads, based on the first obtaining request, the maximum resource amount corresponding to the slot in which the hardware unit is located, and sends, to the BIOS, the maximum resource amount corresponding to the slot in which the hardware unit is located. Correspondingly, the BIOS receives, from the resource manager, the maximum resource amount corresponding to the slot in which the hardware unit is located.

The first obtaining request indicates to obtain the maximum resource amount corresponding to the slot in which the hardware unit is located. If the BIOS has not identified the hardware unit, the first obtaining request includes an identifier of an interface connected to the hardware unit on the circuit board; or if the BIOS has identified the hardware unit, the first obtaining request includes an identifier of the hardware unit and an identifier of an interface connected to the hardware unit on the circuit board.

After obtaining the first obtaining request, the resource manager parses the first obtaining request. If the identifier of the interface is obtained by parsing the first obtaining request but the identifier of the hardware unit is not obtained through parsing, the resource manager identifies, based on the identifier of the interface that is obtained through parsing, each peripheral device connected to the interface. If it is identified that the interface is connected to at least one peripheral device, the resource manager reads a maximum resource amount corresponding to a slot in which the at least one peripheral device is located, and sends, to the BIOS, the read maximum resource amount corresponding to the slot in which the at least one peripheral device is located. Correspondingly, the BIOS receives, from the resource manager, the maximum resource amount corresponding to the slot in which the at least one peripheral device is located, and the BIOS uses any peripheral device in the at least one peripheral device as the hardware unit, and uses the maximum resource amount corresponding to the slot in which the hardware unit is located as the first resource amount corresponding to the hardware unit.

If the identifier of the interface and the identifier of the hardware unit are obtained by parsing the first obtaining request, the resource manager reads, based on the identifier of the interface and the identifier of the hardware unit, the maximum resource amount corresponding to the slot in which the hardware unit is located, and sends, to the BIOS, the maximum resource amount corresponding to the slot in which the hardware unit is located. Correspondingly, the BIOS receives, from the resource manager, the maximum resource amount corresponding to the slot in which the hardware unit is located, and uses the maximum resource amount corresponding to the slot in which the hardware unit is located as the first resource amount corresponding to the hardware unit.

For each peripheral device connected to the interface, if the peripheral device is directly connected to the interface, the interface is a slot in which the peripheral device is located. Then, the resource manager reads, from configuration information of the interface, a maximum resource amount corresponding to the interface. If the peripheral device is connected to the interface through a connector, the resource manager reads, from the connector, the maximum resource amount corresponding to the slot in which the peripheral device is located.

Manner D: The resource manager stores a maximum resource amount corresponding to a slot in which at least one hardware unit is located. The BIOS sends the first obtaining request to the resource amount manager. The resource amount manager receives the first obtaining request, and sends, to the BIOS based on the first obtaining request, a maximum resource amount corresponding to a slot in which the hardware unit in the at least one hardware unit is located.

After the circuit board is powered on, the resource manager identifies each peripheral device connected to the circuit board, uses at least one successfully identified peripheral device as at least one hardware unit connected to the circuit board, separately reads a maximum resource amount corresponding to a slot in which the at least one hardware unit is located, and stores the maximum resource amount corresponding to the slot in which the at least one hardware unit is located. Related descriptions of a process in which the BIOS reads the slot in which the hardware unit is located are provided in Manner C. A process in which the BIOS separately reads the maximum resource amount corresponding to the slot in which the at least one hardware unit is located is not described herein in this embodiment of this application.

After receiving the first obtaining request, if the resource manager can obtain the identifier of the hardware unit by parsing the first obtaining request, the resource manager obtains, based on the identifier of the hardware unit from the stored maximum resource amount corresponding to the slot in which the at least one hardware unit is located, the maximum resource amount corresponding to the slot in which the hardware unit is located, and sends, to the BIOS, the maximum resource amount corresponding to the slot in which the hardware unit is located.

If the identifier of the hardware unit is not obtained by parsing the first obtaining request, and the identifier of the interface connected to the hardware unit is obtained through parsing, the resource manager obtains, based on the identifier of the interface from the stored maximum resource amount corresponding to the slot in which the at least one hardware unit is located, a maximum resource amount corresponding to a slot in which each hardware unit connected to the interface is located, and sends, to the BIOS, the maximum resource amount corresponding to the slot in which each hardware unit connected to the interface is located.

In Manner D, the resource manager stores the maximum resource amount corresponding to the slot in which the at least one hardware unit is located. Therefore, when the BIOS obtains the maximum resource amount corresponding to the slot in which the hardware unit is located through Manner D, after the resource manager receives the first obtaining request, there is no need to read the maximum resource amount corresponding to the slot in which the hardware unit is located. This reduces time for reading the maximum resource amount corresponding to the slot in which the hardware unit is located, and improves efficiency of obtaining, by the BIOS, the maximum resource amount corresponding to the slot in which the hardware unit is located.

It should be noted that a process in which the resource manager identifies the peripheral device connected to the interface is similar to a process in which the BIOS identifies the peripheral device in step 401. The process in which the resource manager identifies the peripheral device connected to the interface is not described again in this embodiment of this application.

602: If the hardware unit is a peripheral device, the BIOS reads, from the hardware unit, a second resource amount corresponding to the hardware unit. The second resource amount is a resource amount requested by the hardware unit.

This step 602 is similar to step 403. Details of step 602 are not described again in this embodiment of this application.

603: The BIOS allocates the resource to the hardware unit based on the first resource amount and the second resource amount.

This step 603 is similar to step 404. Details of step 603 are not described again in this embodiment of this application.

In the method provided in this embodiment of this application, the BIOS of the circuit board obtains, through the resource manager, the first resource amount corresponding to the hardware unit, and reads, from the hardware unit, the second resource amount corresponding to the hardware unit. Then, the BIOS automatically allocates the resource to the hardware unit based on the first resource amount and the second resource amount. In this way, the BIOS can allocate the resource to the hardware unit without being upgraded, which reduces maintenance costs of the BIOS. In addition, the resource manager provides the BIOS with a first resource and the second resource amount corresponding to the hardware unit. This reduces a workload of the BIOS.

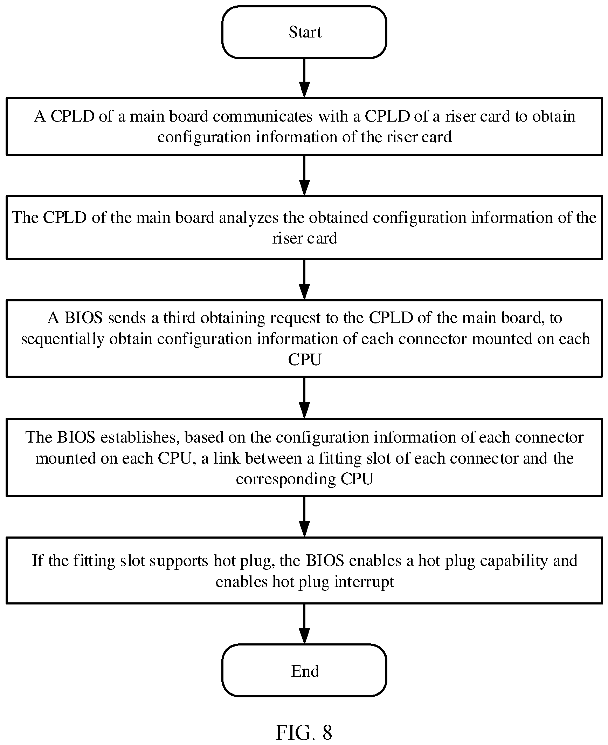

The embodiment shown in FIG. 6 is described by using an example in which a BIOS obtains, from a resource manager, a maximum resource amount of a slot in which a hardware unit is located. In another possible implementation, the BIOS may further obtain, from the resource manager, maximum resource amounts of slots in which a plurality of hardware units are located. Such case is described below by using a schematic, of a structure of a circuit board according to an embodiment of this application, shown in FIG. 7 as an example, and with reference to a flowchart of allocating a bandwidth to a riser card according to an embodiment of this application shown in FIG. 8.

The circuit board in FIG. 7 is used as an example. A main board shown in FIG. 7 includes a CPU, a PCIe bridge, a target chip running a BIOS, a CPLD, and six interfaces. The CPLD of the main board is a resource manager of the main board. The six interfaces are interfaces 1 to 6 respectively. The CPLD of the main board obtains configuration information of each peripheral device connected to the circuit board, to actively send a first resource amount and a second resource amount corresponding to each peripheral device to the BIOS, or send, based on an instruction of the BIOS, the first resource amount and the second resource amount corresponding to each peripheral device to the BIOS. An interface 4 on the main board is used as an example. The interface 4 is connected to a connector, the connector is a riser card, the riser card includes a CPLD, and the CPLD of the l connector is an MCU or an electrically erasable programmable read-only memory (electrically erasable programmable read-only memory, EEPROM).

After the main board is powered on, for each interface connected to the connector, the CPLD of the main board obtains configuration information of the connector connected to the main board from each interface. An interface 4 is used as an example. The CPLD of the main board communicates with the CPLD of the riser card through the interface 4, and communicates with the CPLD of the riser card to obtain configuration information of the riser card. The configuration information includes a device type of the riser card, a quantity of fitting slots on the riser card, a hot plug support status, and a maximum bandwidth supported by each fitting slot (that is, a maximum resource amount corresponding to each fitting slot). After obtaining the configuration information of the riser card, the CPLD of the main board parses the obtained configuration information of the riser card, and stores content of the configuration information obtained through parsing. The CPLD of the main board further determines, by using a correspondence between an interface of the identifier and a link, a link (that is, a link between a processor and a fitting slot) corresponding to each fitting slot on the riser card.

When the BIOS is booted, the BIOS sends a second obtaining request to the CPLD of the main board, where the second obtaining request indicates to obtain configuration information of each connector mounted on each CPU on the main board, to sequentially obtain the configuration information of each connector mounted on each CPU. The CPLD of the main board sends, based on the second obtaining request from stored configuration information of various connectors, the configuration information of each connector mounted on each CPU to the BIOS.

After receiving the configuration information of each connector mounted on each CPU, the BIOS can further obtain, from the configuration information of each connector, a maximum bandwidth (that is, a first resource amount) supported by each fitting slot corresponding to the connector.

After receiving the configuration information of each connector mounted on each CPU, the BIOS establishes, based on the configuration information of each connector mounted on each CPU, a link between the fitting slot of each connector and a corresponding CPU. Still using the riser card shown in FIG. 7 as an example, the BIOS configures the configuration information of the riser card to a control register of a corresponding CPU, and the CPU establishes a link between the fitting slot on the riser card and the CPU based on the configuration information of the riser card. The link includes a PCIe bridge between the CPU and the interface 4.

Then, the BIOS reads, through the link established for each fitting slot and from a peripheral device connected to each fitting slot, a maximum bandwidth (that is, a second resource amount) supported by the peripheral device, to allocate a bandwidth to each peripheral device based on a maximum bandwidth supported by a fitting slot in which each peripheral device is located and a maximum bandwidth supported by each peripheral device.

After the link has been established, if the fitting slot supports hot plug, the BIOS enables a hot plug capability and enables hot plug interrupt.

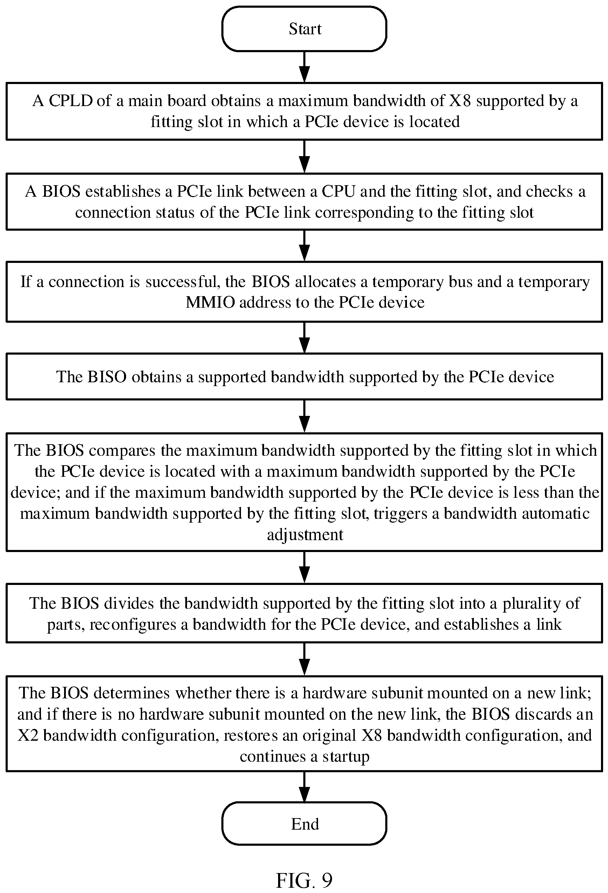

For further descriptions of a process in which a BIOS allocates a bandwidth to a peripheral device when the peripheral device includes a plurality of hardware sub-devices, refer to FIG. 9, which is a flowchart of allocating a bandwidth to a multi-chip PCIe device according to an embodiment of this application. Each PCIe device corresponds to one PCIe bridge (that is, a link between a CPU and the PCIe device), and each chip in the multi-chip PCIe device is equivalent to one hardware subunit (that is, one logical PCIe device). If the multi-chip PCIe device externally presents a physical card, a plurality of PCIe bridges need to be configured in the PCIe device during configuration of the PCIe device. If only one PCIe bridge is configured, the device may be lost and cannot be used normally.

For example, a PCIe device with a bandwidth of X8 is inserted into an X8 fitting slot, the PCIe device includes four hardware subunits, and a maximum bandwidth of each hardware subunit is X2. Still using an example in which a circuit board is a main board, and a resource manager is a CPLD, when the BIOS is booted, the CPLD of the main board obtains the maximum bandwidth of X8 supported by the fitting slot in which the PCIe device is located. After obtaining the maximum bandwidth supported by the fitting slot from the CPLD of the main board, the BIOS stores configuration information of the fitting slot in a control register of the CPU. The CPU establishes a PCIe link between the CPU and the fitting slot based on the configuration information of the fitting slot. After the link has been established, the BIOS checks a connection status of the PCIe link corresponding to the fitting slot. If a connection is successful, the BIOS enables an address translation function of the CPU and allocates a temporary bus (the BIOS allocates a bus 1 to the PCIe device if a bus range of the CPU is 0-63, but the PCIe device may not necessarily use the bus 1 when an operating system is running) and a temporary MMIO address to the PCIe device. The BIOS accesses a PCIe configuration space of the PCIe device by using the temporary bus and the temporary MMIO address, to obtain a supported bandwidth supported by the PCIe device. The BIOS compares the maximum bandwidth supported by the fitting slot in which the PCIe device is located with a maximum bandwidth supported by the PCIe device. If the maximum bandwidth supported by the PCIe device is less than the maximum bandwidth supported by the fitting slot, the following bandwidth automatic adjustment procedure is triggered:

For example, if the obtained maximum bandwidth supported by the PCIe device is X2 and the maximum bandwidth supported by the fitting slot is X8, the BIOS divides the bandwidth supported by the fitting slot into a plurality of parts, reconfigures a bandwidth for the PCIe device, and establishes a link. If a link corresponding to the fitting slot is a PCIe bridge 1, the BIOS establishes logical interfaces 1 to 4, allocates PCIe bridges 1 to 4 to the logical interfaces 1 to 4 respectively, configures bandwidths of the PCIe bridges 1 to 4 on the CPU side to X2, and reinitializes establishment of a link. The BIOS checks a link establishment status of the PCIe bridges 2 to 4. If links are successfully established, the BIOS reallocates a temporary resource, reads the configuration space of the PCIe device, and determines whether there are hardware subunits mounted on new links (for example, the PCIe bridges 2 to 4). If there are hardware subunits mounted on the new links, it indicates that the PCIe includes four hardware subunits, and the previously obtained maximum bandwidth of X2 supported by the PCIe device is a maximum bandwidth supported by a 1^{st} hardware subunit in the four hardware subunits. In this case, the booting is continued. If there is no hardware subunit mounted on the new links, the BIOS discards the X2 bandwidth configuration, restores the original X8 bandwidth configuration, and continues the booting.

FIG. 10 is a flowchart of another resource allocation method of a circuit board when a hardware unit is a processor according to an embodiment of this application. The circuit board is connected to a hardware unit. The circuit board includes a resource manager, and the resource manager is connected to each of a BIOS and the hardware unit. The hardware unit is configured to provide a hardware resource. The method is applied to the BIOS of the circuit board. The method includes the following steps 1001 to 1003.

1001: If the hardware unit is a processor, the BIOS obtains, through the resource manager, a first resource amount corresponding to the hardware unit. The first resource amount is a resource amount pre-allocated by the circuit board to the hardware unit.

In a possible implementation, the BIOS implements step 1001 in either of the following Manner E and Manner F.

Manner E: The resource manager stores average resource amounts of a plurality of resources. The BIOS sends a third obtaining request to the resource manager. The resource manager receives the third obtaining request, and sends an average resource amount of at least one of the plurality of types of resources to the BIOS based on the received third obtaining request. After receiving the average resource amount of the at least one resource, the BIOS uses the average resource amount of the at least one resource as the first resource amount corresponding to the hardware unit.

The plurality of resources include a bus and an MMIO address, and the third obtaining request indicates to obtain the average resource amount of at least one of the plurality of resources.

In a possible implementation, the third obtaining request includes an identifier of at least one resource. After receiving the third obtaining request, the resource manager obtains the identifier of the at least one resource by parsing the third obtaining request. The resource manager obtains, based on the identifier of the at least one resource, the average resource amount of the at least one resource from the stored average resource amounts of the plurality of resources, and sends the obtained average resource amount of the at least one resource to the BIOS. If the BIOS receives the average resource amount of the at least one resource from the resource manager, the BIOS separately uses the average resource amount of the at least one resource as the first resource amount corresponding to the hardware unit.

Alternatively, after receiving the third obtaining request, the resource manager sends a total resource amount of the at least one resource and a quantity of processors on the circuit board to the BIOS. When the BIOS receives the total resource amount of the at least one resource and the quantity of processors on the circuit board, for each of the at least one resource, the BIOS divides a total resource amount of the resource by the quantity of processors, to obtain the first resource amount corresponding to the hardware unit.

Manner F: The resource manager stores a first resource amount corresponding to the at least one processor. The BIOS sends a fourth obtaining request to the resource manager. The resource manager receives the fourth obtaining request, and sends, to the BIOS based on the received fourth obtaining request, the first resource amount corresponding to the hardware unit in the at least one processor. Correspondingly, the BIOS receives the corresponding first resource amount of the hardware unit.

There is at least one first resource amount corresponding to each hardware unit in the at least one processor, and each first resource amount corresponding to each hardware unit is a resource amount of a bus or a resource amount of an MMIO address. The fourth obtaining request indicates to obtain the first resource amount corresponding to the hardware unit.

In a possible implementation, the fourth obtaining request includes an identifier of the hardware unit. After receiving the fourth obtaining request, the resource manager obtains the identifier of the hardware unit by parsing the fourth obtaining request. The resource manager obtains, based on the identifier of the hardware unit, the first resource amount corresponding to the hardware unit from the stored first resource amount corresponding to the at least one processor, and sends the obtained first resource amount corresponding to the hardware unit to the BIOS. Correspondingly, the BIOS can receive the corresponding first resource amount of the hardware unit.

1002: If the hardware unit is a processor, the BIOS obtains a second resource amount corresponding to the hardware unit, where the second resource amount is a resource amount requested by the hardware unit.

If a to-be-allocated is a bus, the BIOS uses a sum of a total resource amount requested by at least one peripheral device mounted on the hardware unit and a fourth resource amount as the second resource amount of the hardware unit. For a process in which the BIOS uses the sum of the total resource amount requested by the at least one peripheral device mounted on the hardware unit and the fourth resource amount as the second resource amount of the hardware unit, refer to the foregoing step 502.

If the to-be-allocated resource is an MMIO address, the BIOS uses a sum of resource amounts requested by the at least one peripheral device mounted on the hardware unit as the second resource amount corresponding to the hardware unit. For a process in which the BIOS uses the sum of the resource amounts requested by the at least one peripheral device mounted on the hardware unit as the second resource amount corresponding to the hardware unit, refer to the foregoing step 503.

1003: The BIOS allocates the resource to the hardware unit based on the first resource amount and the second resource amount.

This step 1003 is similar to step 505. Details of step 1003 are not described again in this embodiment of this application.

In the method provided in this embodiment of this application, the BIOS of the circuit board obtains, through the resource manager, the first resource amount corresponding to the hardware unit, and obtains the second resource amount corresponding to the hardware unit. Then, the BIOS automatically allocates the resource to the hardware unit based on the first resource amount and the second resource amount. In this way, the BIOS can allocate the resource to the hardware unit without being upgraded, which reduces maintenance costs of the BIOS. In addition, the resource manager provides the BIOS with a first resource and the second resource amount corresponding to the hardware unit. This reduces a workload of the BIOS.

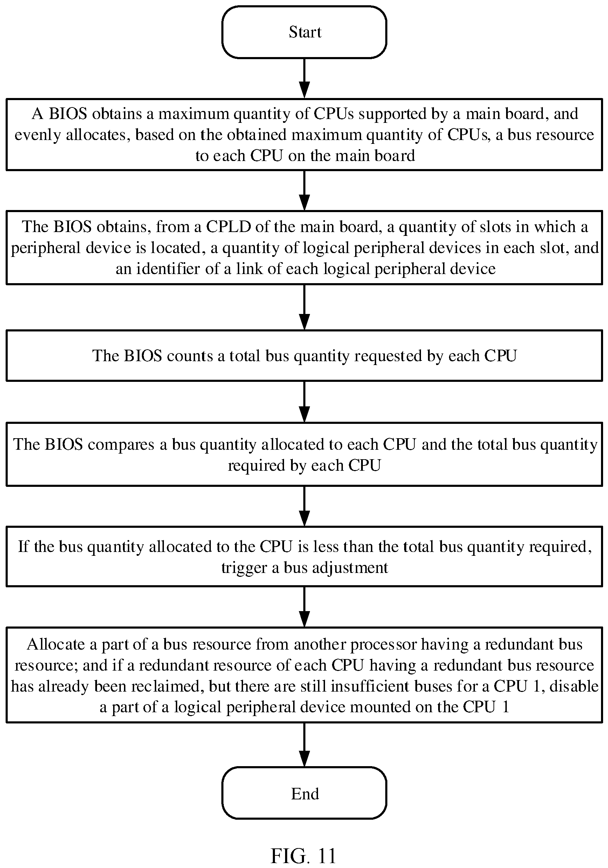

To further describe the process shown in FIG. 10, the following uses an example in which a hardware unit is a CPU. FIG. 11 is a flowchart of allocating a bus to a CPU according to an embodiment of this application. As shown in FIG. 11, in a booting process, a BIOS sends a command to a CPLD (that is, a resource manager) of a main board (that is, a circuit board), to obtain a maximum quantity of CPUs supported by the main board, and evenly allocates, based on the obtained maximum quantity of CPUs, a bus resource to each CPU on the main board. For example, if a main board of a 4P server has four CPUs and has 256 bus numbers (that is, 256 buses), the BIOS initially allocates 64 (256/4) bus numbers to each CPU.

The BIOS obtains, from the CPLD of the main board, a quantity of slots in which a peripheral device is located, a quantity of logical peripheral devices (including various hardware subunits in a first peripheral device and a second peripheral device) in each slot, and an identifier of a link of each logical peripheral device.

A process of obtaining the quantity of logical peripheral devices in each slot includes: The BIOS enables an address translation function of the CPU, and allocates a temporary bus and a temporary MMIO address to the peripheral device connected to each slot. Then, the BIOS reads a configuration space of the peripheral device connected to each slot, and determines whether the peripheral device is valid. (For example, an identifier of a manufacturer and the identifier of the peripheral device are read. If neither of values of the identifier of the manufacturer and the identifier of the peripheral device is FF, the peripheral device is valid.) If the peripheral device is valid, whether the peripheral device includes a hardware subunit is determined. If the peripheral device does not include a hardware subunit, a quantity of peripheral devices is accumulated, or if the peripheral device includes a hardware subunit, a quantity of hardware subunits is accumulated. After peripheral devices connected to links corresponding to all slots are scanned, a quantity of logical peripheral devices mounted on each CPU is obtained, and subsequently, a total bus quantity required by each CPU (that is, a second resource amount corresponding to each CPU) is counted based on a quantity of buses that can be occupied by each logic device (for example, each logic device occupies 1 to 2 bus numbers).

The BIOS compares a bus quantity allocated to each CPU and the total bus quantity required by each CPU, and determines each of the plurality of CPUs. Using a process of determining one CPU as an example, if the bus quantity allocated to the CPU is less than the total bus quantity required, a bus adjustment is triggered; otherwise, the next CPU is determined.

When adjusting the bus resource, the BIOS records a CPU whose allocated bus quantity is less than a total bus quantity required, and an additional bus quantity A required by the CPU. For example, a CPU 1 is allocated 64 bus numbers by default, and the CPU 1 needs 72 buses. In this case, 8 additional buses are required. In other words, A is 8. Then, the BIOS records a CPU whose bus quantity of bus numbers allocated is greater than a total bus quantity required, and a redundant bus number quantity B. For example, if a CPU 2 is allocated 64 bus numbers by default, and the CPU 2 needs 32 bus numbers. In this case, a quantity of extra bus numbers is 32, and B is 32.) If B is greater than A, A bus numbers are directly taken from B and allocated to the CPU 1. Then, an address mapping register of the CPU is reconfigured to reallocate the A bus numbers to the CPU 1.

If B is less than A, a part of the bus resource is taken for allocation from another processor having a redundant bus resource. If a redundant resource of each CPU having a redundant bus resource has already been reclaimed, but there are still insufficient buses for the CPU 1, a part of a logical peripheral device mounted on the CPU 1 is disabled.

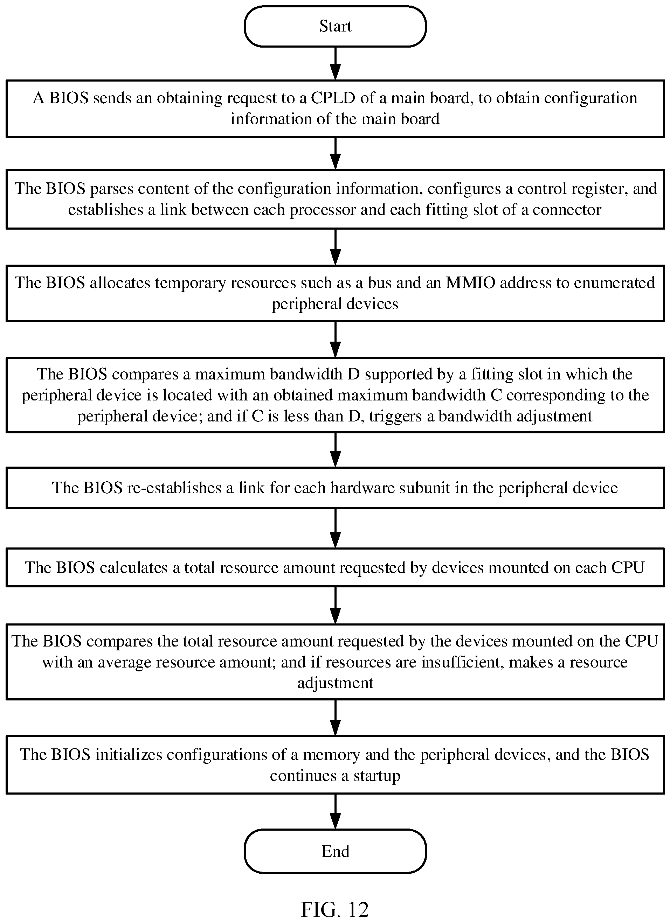

In a possible implementation, the BIOS first allocates a resource to a peripheral device connected to the circuit board, and then allocates a resource to a processor on the circuit board. FIG. 12 is a flowchart of a resource allocation method of a circuit board according to an embodiment of this application. As shown in FIG. 12, an example in which a circuit board is a main board and a resource manager is a CPLD of the main board is used. A BIOS sends an obtaining request (for example, a first obtaining request to a fifth obtaining request, or a sixth obtaining request having a function of the first obtaining request to the fifth obtaining request) to the CPLD of the main board, to obtain configuration information of the main board. After obtaining the configuration information of the main board, the BIOS parses content of the configuration information, and stores, into a control register of a corresponding processor, configuration information of each processor and configuration information of a connector connected to each interface that are in the configuration information, so that the processor establishes a link between each processor and each fitting slot on the connector based on the configuration information of each processor and the information about the connector in the control register. By scanning a peripheral device corresponding to a fitting slot for which a link is successfully established, devices are enumerated. An address translation function of a CPU is enabled, so that a peripheral device connected to the fitting slot can be accessed by using an MMIO address. In addition, temporary resources such as buses and MMIO addresses are allocated to these peripheral devices. For each peripheral device, the BIOS accesses a configuration space of the peripheral device, and obtains, from the configuration space, a maximum bandwidth C corresponding to the peripheral device. The BIOS compares a maximum bandwidth D supported by a fitting slot in which the peripheral device is located with the obtained maximum bandwidth C corresponding to the peripheral device. If C is less than D, the BIOS triggers a bandwidth adjustment. Specifically, if the peripheral device includes a plurality of hardware subunits, and maximum bandwidths corresponding to the hardware subunits are all C, the maximum bandwidth supported by each hardware subunit in the peripheral device is set to C in the control register of the CPU. A link is re-established for each hardware subunit in the peripheral device, and a temporary resource is reallocated for each hardware subunit. After a search is completed for each peripheral device, the BIOS calculates a total resource amount requested by each device mounted on the CPU. For example, the BIOS traverses all logical peripheral devices mounted on each CPU, counts a total quantity of logical peripheral devices mounted on each CPU and a sum of MMIO addresses requested by the logical peripheral devices, and uses the total quantity of logical peripheral devices as a total resource amount of a bus requested by the CPU, and the sum of MMIO addresses requested by the logical peripheral devices as a total resource amount of an MMIO address requested by the CPU. The BIOS divides a maximum bus quantity supported by the main board by a quantity of CPUs to obtain an average resource amount of the bus. The BIOS divides an MMIO address size supported by the main board by the quantity of CPUs to obtain an average resource amount of the MMIO address. The BIOS compares the total resource amount requested by the devices mounted on the CPU with the average resource amount. If resources are insufficient, the BIOS makes a resource adjustment. A bus resource is used as an example. The BIOS compares the total resource amount of the bus requested by each CPU and an average bus resource amount. If the CPU has insufficient resources, that is, the average bus resource amount is less than the total resource amount of the bus requested by the CPU, a resource adjustment between CPUs is triggered. After the adjustment is completed, the BIOS initializes configurations of a memory and the peripheral devices. The BIOS continues a booting. For example, after the adjustment is completed, an address mapping register of the CPU for which the resource adjustment is performed allocates an address resource to the peripheral device. Then, the BIOS continues the booting.

The method in embodiments of this application is described above. An apparatus in embodiments of this application is described below. It should be understood that the apparatus described below has any function of a circuit board in the foregoing method.

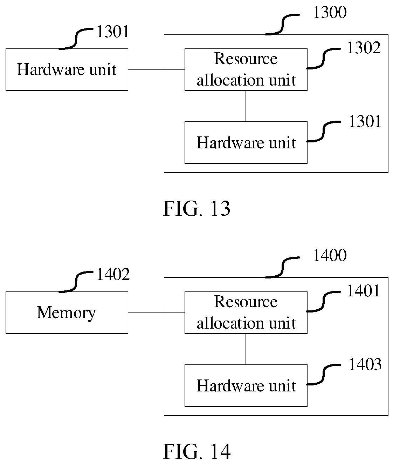

FIG. 13 is a schematic of a structure of a resource allocation apparatus according to an embodiment of this application. The apparatus 1300 shown in FIG. 13 is a circuit board. The circuit board is connected to a hardware unit 1301. The hardware unit 1301 is configured to provide a hardware resource. The apparatus 1300 includes a resource allocation unit 1302. The resource allocation unit 1302 is configured to:
allocate, through a basic input/output system BIOS of the circuit board, a resource to the hardware unit 1301 based on a first resource amount and a second resource amount, where the first resource amount is a resource amount pre-allocated by the circuit board to the hardware unit 1301, and the second resource amount is a resource amount requested by the hardware unit 1301.

In a possible implementation, the circuit board is located in a computer device, the hardware unit 1301 is a peripheral device of the computer device, the hardware unit 1301 is connected to the circuit board through a slot, and the first resource amount is equal to a maximum resource amount corresponding to the slot.

In a possible implementation, the circuit board is connected to a connector, the slot is a fitting slot on the connector, the hardware unit 1301 is connected to the slot, and the resource allocation unit 1302 is further configured to:
read, from the connector through the BIOS, the maximum resource amount corresponding to the slot, and use the read maximum resource amount as the first resource amount.

In a possible implementation, the apparatus 1300 further includes a resource manager, the resource manager is connected to each of the BIOS and the connector, and the resource allocation unit 1302 is further configured to:
read, from the connector through the BIOS and the resource manager, the maximum resource amount corresponding to the slot.

In a possible implementation, the slot is a fitting slot on the circuit board, the hardware unit 1301 is connected to the slot, the apparatus 1300 further includes a resource manager, and the resource manager is connected to each of the BIOS and the slot; and the resource allocation unit 1302 is further configured to:
obtain, through the BIOS and the resource manager, the maximum resource amount corresponding to the slot, and use the obtained maximum resource amount as the first resource amount.

In a possible implementation, the hardware unit 1301 includes a plurality of hardware subunits, the second resource amount includes a plurality of third resource amounts, each third resource amount corresponds to one hardware subunit in the plurality of hardware subunits, each third resource amount is a maximum resource amount corresponding to the corresponding hardware subunit, and the resource allocation unit 1302 is further configured to:
read the plurality of third resource amounts from the hardware unit 1301 through the BIOS.

In a possible implementation, the hardware unit 1301 includes the plurality of hardware subunits, the second resource amount includes the plurality of third resource amounts, each third resource amount corresponds to one hardware subunit in the plurality of hardware subunits, each third resource amount is the maximum resource amount corresponding to the corresponding hardware subunit, and the resource allocation unit 1302 is further configured to:
if the first resource amount is greater than or equal to a sum of the plurality of third resource amounts, separately allocate a resource corresponding to the third resource amount to each hardware subunit through the BIOS.

In a possible implementation, the resource allocation unit 1302 is further configured to:
if the first resource amount is greater than a target resource amount stored at a first address in the hardware unit 1301, create, through the BIOS, at least two logical interfaces for the hardware unit 1301 based on a multiple between the first resource amount and the target resource amount, where a quantity of at least two logical interfaces is equal to the multiple, and each logical interface is configured to mount one hardware subunit in the hardware unit 1301; and
separately perform a subunit mounting operation on the at least two logical interfaces through the BIOS, where the subunit mounting operation is used to mount a hardware subunit on the logical interface, where
if a hardware subunit is successfully mounted on each of a plurality of logical interfaces in the at least two logical interfaces, the hardware unit 1301 includes the plurality of hardware subunits.

In a possible implementation, the apparatus 1300 further includes a processor, and the resource allocation unit 1302 is further configured to:
establish at least two first links through the BIOS, where each first link corresponds to one logical interface, and each first link is used for communication between the processor and the corresponding logical interface; and
establish mapping relationships between the at least two logical interfaces, the at least two first links, and at least two second addresses through the BIOS, where each second address is an address allocated by the BIOS to a hardware subunit mounted on a corresponding logical interface.

In a possible implementation, the hardware unit 1301 is a high-speed serial computer expansion bus standard PCIe device, and the resource is a bandwidth.

In a possible implementation, the apparatus 1300 includes a plurality of processors, the hardware unit 1301 is any one of the plurality of processors, and the first resource amount is equal to a total resource amount of the resource divided by a total quantity of the plurality of processors.

In a possible implementation, the circuit board is located in a computer device, at least one peripheral device of the computer device is mounted on the hardware unit 1301, and the circuit board is connected to the at least one peripheral device through at least one slot; and
if the resource is a bus, the second resource amount is equal to a sum of a total resource amount requested by the at least one peripheral device and a fourth resource amount, where the fourth resource amount is a total resource amount pre-allocated by the BIOS for a hot plug function of a target slot, and the target slot is a slot, in the at least one slot, that has a hot plug function.

In a possible implementation, the total resource amount requested by the at least one peripheral device is equal to a sum of a first quantity and a second quantity, where the first quantity is a total quantity of first peripheral devices in the at least one peripheral device, the second quantity is a total quantity of hardware subunits in a second peripheral device in the at least one peripheral device, the first peripheral device is a peripheral device, in the at least one peripheral device, that does not include a hardware subunit, and the second peripheral device is a peripheral device, in the at least one peripheral device, that includes a hardware subunit; and the resource allocation unit 1302 is further configured to:
count the total quantity of the first peripheral devices in the at least one peripheral device through the BIOS to obtain the first quantity;
count the total quantity of the hardware subunits in the second peripheral device in the at least one peripheral device through the BIOS to obtain the second quantity;
use, through the BIOS, the sum of the first quantity and the second quantity that are counted as the total resource amount requested by the at least one peripheral device;
determine, through the BIOS, the fourth resource amount based on a quantity of target slots in the at least one slot; and
use the sum of the total resource amount requested by the at least one peripheral device and the fourth resource amount as the second resource amount through the BIOS.

In a possible implementation, the circuit board is located in a computer device, at least one peripheral device of the computer device is mounted on the hardware unit 1301, and if the resource is a memory-mapped input/output address, the second resource amount is equal to a sum of resource amounts requested by the at least one peripheral device.

In a possible implementation, the resource allocation unit 1302 is further configured to:
for each peripheral device in the at least one peripheral device, if the peripheral device does not include a hardware subunit, use, through the BIOS, a maximum resource amount corresponding to the peripheral device as a resource amount requested by the peripheral device, or if the peripheral device includes a plurality of hardware subunits, use a sum of maximum resource amounts corresponding to the plurality of hardware subunits as a resource amount requested by the peripheral device; and
use the sum of resource amounts requested by the at least one peripheral device as the second resource amount through the BIOS.

In a possible implementation, the resource allocation unit 1302 is further configured to:
if the first resource amount is stored in the BIOS, obtain the stored first resource amount through the BIOS; and
if the circuit board further includes a resource manager, obtain the first resource amount through the BIOS and the resource manager, where the resource manager is connected to each of the BIOS, the hardware unit 1301, and the at least one peripheral device.

In a possible implementation, the resource allocation unit 1302 is further configured to:
if the first resource amount is less than the second resource amount, and a target processor exists in the plurality of processors, allocate a redundant resource of the target processor to the hardware unit 1301 through the BIOS, so that the hardware unit 1301 is allocated a resource of the second resource amount, where
a resource amount of a resource pre-allocated by the circuit board to the target processor is greater than a resource amount requested by the target processor.

In a possible implementation, the resource manager is a complex programmable logic device or a microcontroller.

In a possible implementation, the resource allocation unit 1302 is a target chip.

It should be understood that the apparatus 1300 corresponds to the circuit board in the foregoing method embodiment, and the modules in the apparatus 1300 and the foregoing other operations and/or functions are respectively used to implement various steps and the method implemented by the circuit board in the method embodiment. For specific details, refer to the foregoing method embodiment. For brevity, details are not described herein again.

It should be understood that, when the apparatus 1300 allocates a resource to the hardware unit, division into the foregoing functional modules is merely used as an example for description. During actual application, the foregoing functions may be allocated to different functional modules for implementation based on a requirement. In other words, an inner structure of the apparatus 1300 is divided into different functional modules, to implement all or some of the functions described above. In addition, the apparatus 1300 provided in the foregoing embodiment and the foregoing method embodiment pertain to a same concept. For a specific implementation process of the apparatus, refer to the foregoing method embodiment. Details are not described herein again.

It should be understood that the apparatus 1300 may be equivalent to the circuit board 100, and a target chip in the circuit board is equivalent to the resource allocation unit 1302.

When the apparatus 1300 is configured as a circuit board, a BIOS of the circuit board automatically allocates a resource to a hardware unit based on a resource amount pre-allocated by the circuit board for the hardware unit and a resource amount requested by the hardware unit. In this way, the BIOS can allocate the resource to the hardware unit without being upgraded, which reduces maintenance costs of the BIOS.

FIG. 14 is a schematic of a structure of a circuit board according to an embodiment of this application. A circuit board 1400 shown in FIG. 14 includes a resource allocation unit 1401. The resource allocation unit 1401 loads at least one piece of program code from a memory 1402. The program code is executed by the resource allocation unit 1401 to implement the foregoing resource allocation method. The memory 1402 and the resource allocation unit 1401 may be connected by using a bus or a signal cable. The memory 1402 is located in the circuit board 1400, or is located outside the circuit board 1400. If the memory 1402 is located outside the circuit board 1400, the memory 1402 is a peripheral device of the circuit board 1400.

In a possible implementation, the circuit board 1400 further includes at least one hardware unit 1403. Each hardware unit 1403 is a processor or a peripheral device. The resource allocation unit executes at least one piece of program code to implement the foregoing resource allocation method, so that a resource of the circuit board 1400 is allocated to the hardware unit 1403.

In an example embodiment, a computer-readable storage medium is further provided, for example, a memory including program code. The program code may be executed by a resource allocation unit in a circuit board to perform the resource allocation method in the foregoing embodiment. For example, the computer-readable storage medium is a non-transitory computer-readable storage medium, such as a read-only memory (read-only memory, ROM), a random access memory (random access memory, RAM), a compact disc read-only memory (compact disc read-only memory, CD-ROM), a magnetic tape, a floppy disk, or an optical data storage device.

An embodiment of this application further provides a computer program product. The computer program product includes program code, where the program code is stored in a computer-readable storage medium. A resource allocation unit in a circuit board reads the program code from the computer-readable storage medium. The resource allocation unit executes the program code to implement the foregoing resource allocation method.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term such as "example" or "for example" is used to represent giving an example, an illustration, or a description. Any embodiment or design described by "example" or "for example" in this application should not be construed as being more preferred or advantageous than another embodiment or design. To be precise, the term such as "example" or "for example" is intended to present a related concept in a specific manner.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, both a first resource amount and a second resource amount in this application are obtained under full authorization.

All of the foregoing technical solutions may form optional embodiments of the present disclosure through any combination. Details are not described herein again.

The foregoing descriptions are merely optional embodiments of this application, but are not intended to limit this application. Any modification, equivalent replacement, improvement, or the like made within the spirit and principle of this application shall fall within the protection scope of this application.

## Claims

1. A resource allocation method of a circuit board, wherein the circuit board is connected to a hardware unit, the hardware unit is configured to provide a hardware resource, the method is applied to a basic input/output system BIOS of the circuit board, and the method comprises:
allocating a resource to the hardware unit based on a first resource amount and a second resource amount, wherein the first resource amount is a resource amount pre-allocated by the circuit board to the hardware unit, and the second resource amount is a resource amount requested by the hardware unit.

2. The method according to claim 1, wherein the circuit board is located in a computer device, the hardware unit is a peripheral device of the computer device, the hardware unit is connected to the circuit board through a slot, and the first resource amount is equal to a maximum resource amount corresponding to the slot.

3. The method according to claim 2, wherein the circuit board is connected to a connector, the slot is a fitting slot on the connector, the hardware unit is connected to the slot, and before the allocating a resource to the hardware unit based on a first resource amount and a second resource amount, the method further comprises:
reading, from the connector, the maximum resource amount corresponding to the slot, and using the read maximum resource amount as the first resource amount.

4. The method according to claim 3, wherein the circuit board further comprises a resource manager, the resource manager is connected to each of the BIOS and the connector, and the reading, from the connector, the maximum resource amount corresponding to the slot comprises:
reading, from the connector through the resource manager, the maximum resource amount corresponding to the slot.

5. The method according to claim 2, wherein the slot is a fitting slot on the circuit board, the hardware unit is connected to the slot, the circuit board further comprises a resource manager, the resource manager is connected to each of the BIOS and the slot, and before the allocating a resource to the hardware unit based on a first resource amount and a second resource amount, the method further comprises:
obtaining, through the resource manager, the maximum resource amount corresponding to the slot, and using the obtained maximum resource amount as the first resource amount.

6. The method according to any one of claims 2 to 5, wherein the hardware unit comprises a plurality of hardware subunits, the second resource amount comprises a plurality of third resource amounts, each third resource amount corresponds to one hardware subunit in the plurality of hardware subunits, each third resource amount is a maximum resource amount corresponding to the corresponding hardware subunit, and before the allocating a resource to the hardware unit based on a first resource amount and a second resource amount, the method further comprises:
reading the plurality of third resource amounts from the hardware unit.

7. The method according to any one of claims 2 to 6, wherein the hardware unit comprises the plurality of hardware subunits, the second resource amount comprises the plurality of third resource amounts, each third resource amount corresponds to one hardware subunit in the plurality of hardware subunits, each third resource amount is the maximum resource amount corresponding to the corresponding hardware subunit, and the allocating a resource to the hardware unit based on a first resource amount and a second resource amount comprises:
if the first resource amount is greater than or equal to a sum of the plurality of third resource amounts, separately allocating a resource corresponding to the third resource amount to each hardware subunit.

8. The method according to claim 6 or 7, wherein before the allocating a resource to the hardware unit based on a first resource amount and a second resource amount, the method further comprises:
if the first resource amount is greater than a target resource amount stored at a first address in the hardware unit, creating at least two logical interfaces for the hardware unit based on a multiple between the first resource amount and the target resource amount, wherein a quantity of the at least two logical interfaces is equal to the multiple, and each logical interface is configured to mount one hardware subunit in the hardware unit; and
separately performing a subunit mounting operation on the at least two logical interfaces, wherein the subunit mounting operation is used to mount a hardware subunit on the logical interface, wherein
if a hardware subunit is successfully mounted on each of a plurality of logical interfaces in the at least two logical interfaces, the hardware unit comprises the plurality of hardware subunits.

9. The method according to claim 8, wherein the circuit board further comprises a processor, and the separately performing a subunit mounting operation on the at least two logical interfaces comprises:
establishing at least two first links, wherein each first link corresponds to one logical interface, and each first link is used for communication between the processor and the corresponding logical interface; and
establishing mapping relationships between the at least two logical interfaces, the at least two first links, and at least two second addresses, wherein each second address is an address allocated by the BIOS to a hardware subunit mounted on a corresponding logical interface.

10. The method according to any one of claims 2 to 9, wherein the hardware unit is a high-speed serial computer expansion bus standard PCIe device, and the resource is a bandwidth.

11. The method according to claim 1, wherein the circuit board comprises a plurality of processors, the hardware unit is any one of the plurality of processors, and the first resource amount is equal to a total resource amount of the resource divided by a total quantity of the plurality of processors.

12. The method according to claim 1 or 11, wherein the circuit board is located in a computer device, at least one peripheral device of the computer device is mounted on the hardware unit, and the circuit board is connected to the at least one peripheral device through at least one slot; and
if the resource is a bus, the second resource amount is equal to a sum of a total resource amount requested by the at least one peripheral device and a fourth resource amount, wherein the fourth resource amount is a total resource amount pre-allocated by the BIOS for a hot plug function of a target slot, and the target slot is a slot, in the at least one slot, that has a hot plug function.

13. The method according to claim 12, wherein the total resource amount requested by the at least one peripheral device is equal to a sum of a first quantity and a second quantity, wherein the first quantity is a total quantity of first peripheral devices in the at least one peripheral device, the second quantity is a total quantity of hardware subunits in a second peripheral device in the at least one peripheral device, the first peripheral device is a peripheral device, in the at least one peripheral device, that does not comprise a hardware subunit, and the second peripheral device is a peripheral device, in the at least one peripheral device, that comprises a hardware subunit; and before the allocating a resource to the hardware unit based on a first resource amount and a second resource amount, the method further comprises:
counting the total quantity of the first peripheral devices in the at least one peripheral device to obtain the first quantity;
counting the total quantity of the hardware subunits in the second peripheral device in the at least one peripheral device to obtain the second quantity;
using the sum of the first quantity and the second quantity that are counted as the total resource amount requested by the at least one peripheral device;
determining the fourth resource amount based on a quantity of target slots in the at least one slot; and
using the sum of the total resource amount requested by the at least one peripheral device and the fourth resource amount as the second resource amount.

14. The method according to claim 1 or 11, wherein the circuit board is located in a computer device, at least one peripheral device of the computer device is mounted on the hardware unit, and if the resource is a memory-mapped input/output address, the second resource amount is equal to a sum of resource amounts requested by the at least one peripheral device.

15. The method according to claim 14, wherein before the allocating a resource to the hardware unit based on a first resource amount and a second resource amount, the method further comprises:
for each peripheral device in the at least one peripheral device, if the peripheral device does not comprise a hardware subunit, using a maximum resource amount corresponding to the peripheral device as a resource amount requested by the peripheral device, or if the peripheral device comprises a plurality of hardware subunits, using a sum of maximum resource amounts corresponding to the plurality of hardware subunits as a resource amount requested by the peripheral device; and
using the sum of resource amounts requested by the at least one peripheral device as the second resource amount.

16. The method according to claim 12 or 14, wherein before the allocating a resource to the hardware unit based on a first resource amount and a second resource amount, the method further comprises:
if the first resource amount is stored in the BIOS, obtaining the stored first resource amount; and
if the circuit board further comprises a resource manager, obtaining the first resource amount through the resource manager, wherein the resource manager is connected to each of the BIOS, the hardware unit, and the at least one peripheral device.

17. The method according to any one of claims 11 to 16, wherein the allocating a resource to the hardware unit based on a first resource amount and a second resource amount comprises:
if the first resource amount is less than the second resource amount, and a target processor exists in the plurality of processors, allocating a redundant resource of the target processor to the hardware unit, so that the hardware unit is allocated a resource of the second resource amount, wherein
a resource amount of a resource pre-allocated by the circuit board to the target processor is greater than a resource amount requested by the target processor.

18. The method according to any one of claim 4, 5, or 16, wherein the resource manager is a complex programmable logic device or a microcontroller.

19. A resource allocation apparatus, wherein the apparatus is a circuit board, the circuit board is connected to a hardware unit, the hardware unit is configured to provide a hardware resource, the apparatus comprises a resource allocation unit, and the resource allocation unit is configured to:
allocate, through a basic input/output system BIOS of the circuit board, a resource to the hardware unit based on a first resource amount and a second resource amount, wherein the first resource amount is a resource amount pre-allocated by the circuit board to the hardware unit, and the second resource amount is a resource amount requested by the hardware unit.

20. The apparatus according to claim 19, wherein the circuit board is located in a computer device, the hardware unit is a peripheral device of the computer device, the hardware unit is connected to the circuit board through a slot, and the first resource amount is equal to a maximum resource amount corresponding to the slot.

21. The apparatus according to claim 20, wherein the circuit board is connected to a connector, the slot is a fitting slot on the connector, the hardware unit is connected to the slot, and the resource allocation unit is further configured to:
read, from the connector through the BIOS, the maximum resource amount corresponding to the slot, and use the read maximum resource amount as the first resource amount.

22. The apparatus according to claim 21, wherein the apparatus further comprises a resource manager, the resource manager is connected to each of the BIOS and the connector, and the resource allocation unit is further configured to:
read, from the connector through the BIOS and the resource manager, the maximum resource amount corresponding to the slot.

23. The apparatus according to claim 20, wherein the slot is a fitting slot on the circuit board, the hardware unit is connected to the slot, the apparatus further comprises a resource manager, and the resource manager is connected to each of the BIOS and the slot; and the resource allocation unit is further configured to:
obtain, through the BIOS and the resource manager, the maximum resource amount corresponding to the slot, and use the obtained maximum resource amount as the first resource amount.

24. The apparatus according to any one of claims 20 to 23, wherein the hardware unit comprises a plurality of hardware subunits, the second resource amount comprises a plurality of third resource amounts, each third resource amount corresponds to one hardware subunit in the plurality of hardware subunits, each third resource amount is a maximum resource amount corresponding to the corresponding hardware subunit, and the resource allocation unit is further configured to:
read the plurality of third resource amounts from the hardware unit through the BIOS.

25. The apparatus according to any one of claims 20 to 24, wherein the hardware unit comprises the plurality of hardware subunits, the second resource amount comprises the plurality of third resource amounts, each third resource amount corresponds to one hardware subunit in the plurality of hardware subunits, each third resource amount is the maximum resource amount corresponding to the corresponding hardware subunit, and the resource allocation unit is further configured to:
if the first resource amount is greater than or equal to a sum of the plurality of third resource amounts, separately allocate a resource corresponding to the third resource amount to each hardware subunit through the BIOS.

26. The apparatus according to claim 24 or 25, wherein the resource allocation unit is further configured to:
if the first resource amount is greater than a target resource amount stored at a first address in the hardware unit, create, through the BIOS, at least two logical interfaces for the hardware unit based on a multiple between the first resource amount and the target resource amount, wherein a quantity of at least two logical interfaces is equal to the multiple, and each logical interface is configured to mount one hardware subunit in the hardware unit; and
separately perform a subunit mounting operation on the at least two logical interfaces through the BIOS, wherein the subunit mounting operation is used to mount a hardware subunit on the logical interface, wherein
if a hardware subunit is successfully mounted on each of a plurality of logical interfaces in the at least two logical interfaces, the hardware unit comprises the plurality of hardware subunits.

27. The apparatus according to claim 26, wherein the apparatus further comprises a processor, and the resource allocation unit is further configured to:
establish at least two first links through the BIOS, wherein each first link corresponds to one logical interface, and each first link is used for communication between the processor and the corresponding logical interface; and
establish mapping relationships between the at least two logical interfaces, the at least two first links, and at least two second addresses through the BIOS, wherein each second address is an address allocated by the BIOS to a hardware subunit mounted on a corresponding logical interface.

28. The apparatus according to any one of claims 20 to 27, wherein the hardware unit is a high-speed serial computer expansion bus standard PCIe device, and the resource is a bandwidth.

29. The apparatus according to claim 19, wherein the apparatus comprises a plurality of processors, the hardware unit is any one of the plurality of processors, and the first resource amount is equal to a total resource amount of the resource divided by a total quantity of the plurality of processors.

30. The apparatus according to claim 19 or 29, wherein the circuit board is located in a computer device, at least one peripheral device of the computer device is mounted on the hardware unit, and the circuit board is connected to the at least one peripheral device through at least one slot; and
if the resource is a bus, the second resource amount is equal to a sum of a total resource amount requested by the at least one peripheral device and a fourth resource amount, wherein the fourth resource amount is a total resource amount pre-allocated by the BIOS for a hot plug function of a target slot, and the target slot is a slot, in the at least one slot, that has a hot plug function.

31. The apparatus according to claim 30, wherein the total resource amount requested by the at least one peripheral device is equal to a sum of a first quantity and a second quantity, wherein the first quantity is a total quantity of first peripheral devices in the at least one peripheral device, the second quantity is a total quantity of hardware subunits in a second peripheral device in the at least one peripheral device, the first peripheral device is a peripheral device, in the at least one peripheral device, that does not comprise a hardware subunit, and the second peripheral device is a peripheral device, in the at least one peripheral device, that comprises a hardware subunit; and the resource allocation unit is further configured to:
count the total quantity of the first peripheral devices in the at least one peripheral device through the BIOS to obtain the first quantity;
count the total quantity of the hardware subunits in the second peripheral device in the at least one peripheral device through the BIOS to obtain the second quantity;
use, through the BIOS, the sum of the first quantity and the second quantity that are counted as the total resource amount requested by the at least one peripheral device;
determine, through the BIOS, the fourth resource amount based on a quantity of target slots in the at least one slot; and
use the sum of the total resource amount requested by the at least one peripheral device and the fourth resource amount as the second resource amount through the BIOS.

32. The apparatus according to claim 19 or 29, wherein the circuit board is located in a computer device, at least one peripheral device of the computer device is mounted on the hardware unit, and if the resource is a memory-mapped input/output address, the second resource amount is equal to a sum of resource amounts requested by the at least one peripheral device.

33. The apparatus according to claim 32, wherein the resource allocation unit is further configured to:
for each peripheral device in the at least one peripheral device, if the peripheral device does not comprise a hardware subunit, use, through the BIOS, a maximum resource amount corresponding to the peripheral device as a resource amount requested by the peripheral device, or if the peripheral device comprises a plurality of hardware subunits, use a sum of maximum resource amounts corresponding to the plurality of hardware subunits as a resource amount requested by the peripheral device; and
use the sum of resource amounts requested by the at least one peripheral device as the second resource amount through the BIOS.

34. The apparatus according to claim 30 or 32, wherein the resource allocation unit is further configured to:
if the first resource amount is stored in the BIOS, obtain the stored first resource amount through the BIOS; and
if the circuit board further comprises a resource manager, obtain the first resource amount through the BIOS and the resource manager, wherein the resource manager is connected to each of the BIOS, the hardware unit, and the at least one peripheral device.

35. The apparatus according to any one of claims 19 to 34, wherein the resource allocation unit is further configured to:
if the first resource amount is less than the second resource amount, and a target processor exists in the plurality of processors, allocate a redundant resource of the target processor to the hardware unit through the BIOS, so that the hardware unit is allocated a resource of the second resource amount, wherein
a resource amount of a resource pre-allocated by the circuit board to the target processor is greater than a resource amount requested by the target processor.

36. The apparatus according to any one of claim 22, 23, or 34, wherein the resource manager is a complex programmable logic device or a microcontroller.

37. A circuit board, wherein the circuit board comprises a resource allocation unit, the resource allocation unit loads at least one piece of program code from a memory, and the program code is executed by the resource allocation unit to implement the method according to any one of claims 1 to 18.

38. A computer-readable storage medium, wherein the storage medium stores at least one piece of program code, and the at least one piece of program code is read by a resource allocation unit in a circuit board, so that the resource allocation unit performs the method according to any one of claims 1 to 18.
